# EUROPEAN PATENT APPLICATION

(11) **EP 3 048 568 A1**
(43) Date of publication of application: **27.07.2016**
(21) Application number: 16152045.7
(22) Date of filing: 20.01.2016
(51) Int. Cl.: G06Q 10/00, G06Q 40/06

(54) **METHOD, SERVER AND SYSTEM FOR ESTIMATING PATENT PROSECUTION RELATED ACTIVITY**

(30) Priority: 22.01.2015 KR 20150010646; 17.07.2015 KR 20150101771
(71) Applicant: Electronics and Telecommunications Research Institute, Daejeon 34129 (KR)
(72) Inventor: WON, Jeong Wook, 34818 Daejeon (KR)
(74) Representative: Betten & Resch

(57) **Abstract**

Provided are a method, server, and a system for estimating patent prosecution related activity for a selected inquiry period. The method includes receiving at least one type of values among policy variable values, period-specific representative values, and expense parameter values, calculating patent prosecution related activity and the dates of incurrence of expenses regarding the case information to generate a matched expense item, recording field values in a table, and outputting the table in which the field values are recorded according to an output condition.

## Description

### CROSS-REFERENCE TO RELATED APPLICATION

This application claims priority to and the benefit of Korean Patent Application No. 10-2015-0010646, filed on January 22, 2015 and No. 10-2015-0101771, filed on July 17, 2015, the disclosure of which is incorporated herein by reference in its entirety.

### BACKGROUND

### 1. Field of the Invention

The present invention relates to a method, server, and a system for estimating patent prosecution related activity and patent expenses, and more particularly, to a system and method for estimating the patent prosecution related activity and expenses for respective stages from filing of an intellectual property right, such as a patent, a trademark, or an industrial design, to maintenance thereof after registration.

### 2. Discussion of Related Art

A patent management department performs management according to procedures of receipt of an invention, filing, office action responses, registration, and maintenance.

In relation to the corresponding work, the patent management department comprehensively manages a statutory period and an expense incurred within the period.

For example, patent management of research institutes, schools, and companies relates to a series of processes for receipt, filing, request for examination, issuance of an office action, response of an office action, registration, and maintenance.

The patent management department is required to do the work within the statutory period and accurately calculate an expense for doing the work.

As main functions, a patent management system according to the related art provides a function of managing the aforementioned patent proceeding procedures, a function of managing details of payment for expenses incurred during the corresponding procedures, and a function of managing details of a compensation payment to the inventor or a marketing contributor for obtainment of a license.

When the number of cases managed by the patent management department increases, it is necessary to estimate expenses to be paid in the future.

The patent management system according to the related art manages current or past expenses only.

In other words, the number of received cases, the number of applied cases, the number of office actions, the number of registered cases, the number of maintained cases, etc. are calculated and multiplied by a rough average expense thereof to estimate expenses, and thus it is not possible to estimate accurate expenses.

Also, since the patent system varies from one country to another (e.g., while US requires a patent registration maintenance fee three times, that is, in 3.5 years, 7.5 years, and 11.5 years, most countries require a patent registration maintenance fee every three years or every year), a manager without business knowledge about expense processing has a difficulty in expense estimation and processing.

In other words, efficiency and accuracy in expense estimation are lowered, and it is not possible to estimate an expense according to a patent management policy.

Patent management departments of respective research institutes, companies, colleges, etc., know these problems, but have many difficulties in patent expense management because there is no proper solution.

### SUMMARY OF THE INVENTION

The present invention is directed to providing a method, server, and system for estimating a patent expense which can accurately estimate an incurred expense according to an expense management policy by examining all expense items in relation to a patent management work process, so that patent expenses can be efficiently managed.

The present invention is also directed to providing a system capable of estimating an expense to be incurred in the future or an expense item which has been charged but has not been paid yet, analyzing country-specific expenses, estimating official fees and service fees, analyzing period (day, week, month, quarter, and year)-specific expenses and attorney-specific fees, and analyzing periods between work process stages.

According to an aspect of the present invention, there is provided a method of estimating a patent prosecution related activity during a selected inquiry period, the method including: receiving, by a data input unit, at least one type of values among policy variable values, period-specific representative values, and expense parameter values; receiving, by a table construction unit, a setting value from the data input unit, generating case information of at least one type of cases among previously received cases and cases to be received in the future, and calculating dates of patent prosecution related activity and incurrence of expenses regarding the case information to generate a matched expense item; recording field values including the dates of incurrence of expenses regarding the case information and incurred expenses in a table; and outputting the table in which the field values are recorded according to an output condition.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1A is a block diagram of a system for estimating patent prosecution related activity and a patent expense according to an exemplary embodiment of the present invention;
FIG. 1B is a relationship diagram between a system for estimating patent prosecution related activity and a patent expense and a patent management system according to an exemplary embodiment of the present invention;
FIG. 1C is a diagram showing detailed configurations of a system for estimating patent prosecution related activity and a patent expense and a patent management system according to an exemplary embodiment of the present invention;
FIG. 1D is an exemplary diagram of a computer system implementing an embodiment of the present invention.
FIG. 2 is a flowchart illustrating a method of estimating a patent expense according to an exemplary embodiment of the present invention;
FIGS. 3A to 3F are diagrams showing display screens of a terminal to which policy variable values, period-specific representative values, and foreign exchange rates are input;
FIG. 4A is a diagram showing expenses incurred between patent filing and registration.
FIG. 4B is a diagram showing maintenance expenses in Korea;
FIG. 5 is a diagram showing dates of incurrence of Korean patent expenses;
FIG. 6 is a diagram showing expense items incurred on dates of incurrence of Korean patent expenses;
FIG. 7 is a diagram showing dates of incurrence of US patent expenses;
FIG. 8 is a diagram showing expense items incurred on dates of incurrence of US patent expenses;
FIG. 9 is a diagram showing dates of incurrence of European Union (EU) patent expenses;
FIG. 10 is a diagram showing expense items incurred on dates of incurrence of EU patent expenses;
FIGS. 11A to 11D are showing field values recorded in a table as examples;
FIG. 12 is a diagram showing a screen for inputting common policy variable values according to an exemplary embodiment of the present invention;
FIG. 13 is a diagram showing a screen for inputting country-specific policy variable values according to an exemplary embodiment of the present invention;
FIG. 14 is a diagram showing a screen for modifying country-specific policy variable values;
FIG. 15 is a diagram showing a list of policy variables according to an exemplary embodiment of the present invention;
FIGS. 16 and 17 are diagrams showing screens for inputting policy variable values according to an exemplary embodiment of the present invention;
FIG. 18 is a diagram showing a screen for selecting a country to which a policy variable is applied according to an exemplary embodiment of the present invention;
FIG. 19 is a diagram showing a screen for providing exchange rate information according to an exemplary embodiment of the present invention;
FIGS. 20 and 21 are diagrams showing processes of registering and modifying exchange rate information according to an exemplary embodiment of the present invention;
FIG. 22 is a diagram showing a screen for inputting expense parameters according to an exemplary embodiment of the present invention;
FIGS. 23 and 24 are diagrams showing a process of registering a filing fee according to an exemplary embodiment of the present invention;
FIGS. 25 to 27 are diagrams showing processes of registering and modifying a maintenance expense according to an exemplary embodiment of the present invention;
FIG. 28 is a diagram showing a screen for inputting information on expense estimation settings according to an exemplary embodiment of the present invention;
FIG. 29 is a diagram showing a screen for checking case-specific expense estimation results according to an exemplary embodiment of the present invention;
FIG. 30 is a diagram showing a screen for checking annual expense estimation results according to an exemplary embodiment of the present invention;
FIG. 31 is a diagram showing a screen for checking an expense estimation error according to an exemplary embodiment of the present invention;
FIG. 32 is a diagram showing a screen for checking results of expense estimation processing according to an exemplary embodiment of the present invention;
FIGS. 33A and 33B are diagrams showing a screen for checking policy variables according to an exemplary embodiment of the present invention;
FIG. 34 is a diagram showing a screen for entire examination settings according to an exemplary embodiment of the present invention; and
FIG. 35 is a diagram showing a screen for displaying history information of expense estimation searches according to an exemplary embodiment of the present invention.

### DETAILED DESCRIPTION OF EXEMPLARY EMBODIMENTS

Advantages and features of the present invention and a method of achieving the same will be more clearly understood from embodiments described below in detail with reference to the accompanying drawings.

However, the present invention is not limited to the following embodiments and may be implemented in various different forms. The embodiments are provided merely for complete disclosure of the present invention and to fully convey the scope of the invention to those of ordinary skill in the art to which the present invention pertains. The present invention is defined only by the scope of the claims.

Meanwhile, the terminology used herein is for the purpose of describing the embodiments and is not intended to be limiting of the invention. As used in this specification, the singular form of a word includes the plural unless the context clearly indicates otherwise. The term "comprise" and/or "comprising," when used herein, does not preclude the presence or addition of one or more components, steps, operations, and/or elements other than stated components, steps, operations, and/or elements.

To aid in understanding the present invention, the present invention will be generally divided into two stages and described in detail.

The basic technical spirit of patent expense estimation will be described in the first stage, and exemplary embodiments of patent expense estimation will be described in the second stage.

### I. First stage (basic technical spirit of patent expense estimation)

The basic technical spirit of patent expense estimation will be described in the first stage.

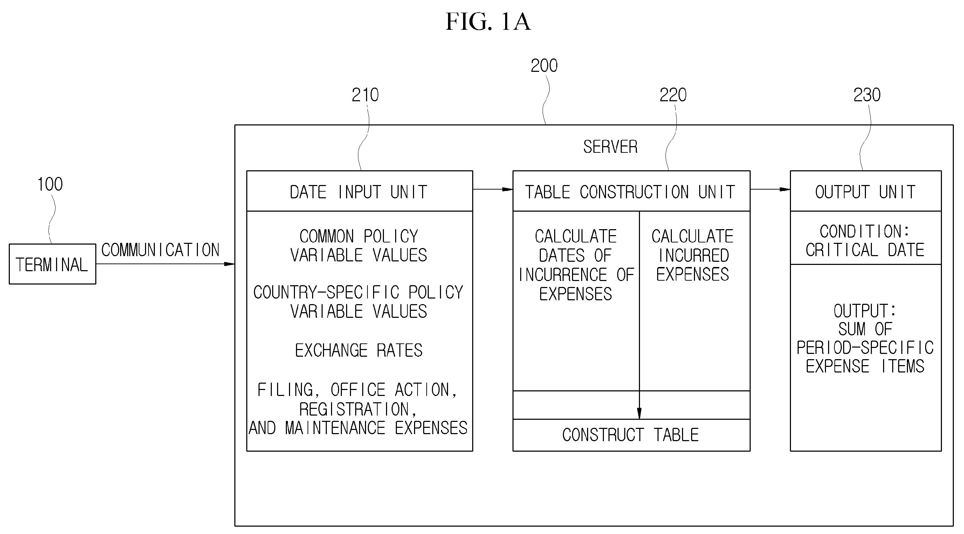

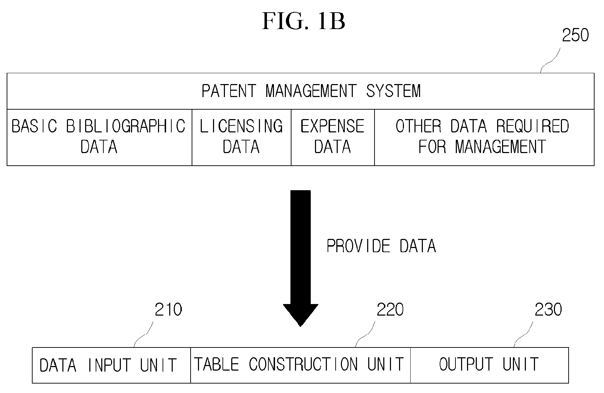

FIG. 1A is a block diagram of a system for estimating patent prosecution related activity and a patent expense according to an exemplary embodiment of the present invention, and FIG. 1B is a block diagram showing a relationship between the aforementioned system for estimating a patent expense and a patent management system.

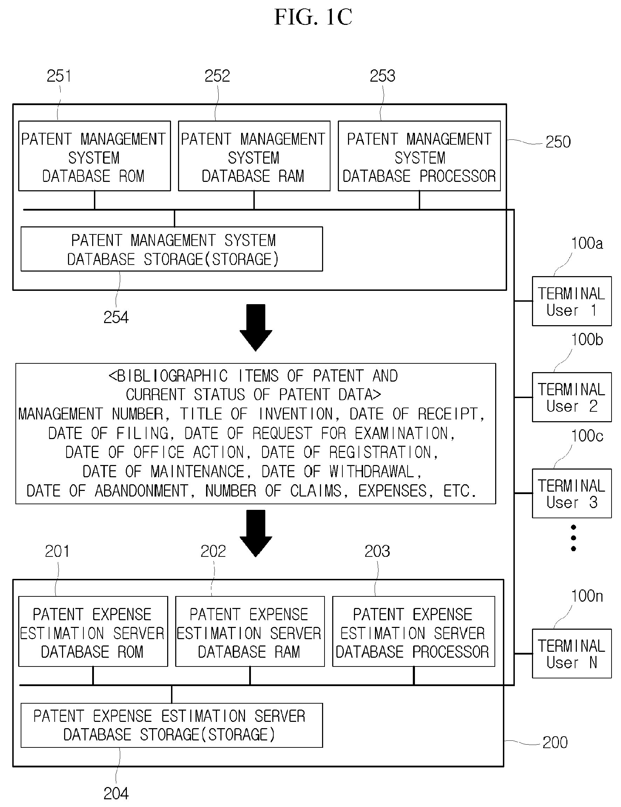

FIG. 1C is a diagram showing detailed configurations of a system for estimating patent prosecution related activity and a patent expense and a patent management system according to an exemplary embodiment of the present invention.

As shown in FIG. 1C, respective users have terminals 100a to 100n, and a patent expense estimation server 200 receives bibliographic items, such as a management number, the title of the invention, the date of receipt, the date of filing, the date of request for examination, the date of an office action, the date of registration, the date of maintenance, the date of withdrawal, the date of abandonment, the number of claims, and expenses, and a current status of patent data from a patent management system 250.

The patent management system 250 includes a database read-only memory (ROM) 251, a database random access memory (RAM) 252, a database processor 253, and a database storage 254.

The patent expense estimation server 200 includes a database ROM 201, a database RAM 202, a database processor 203, and a database storage 204.

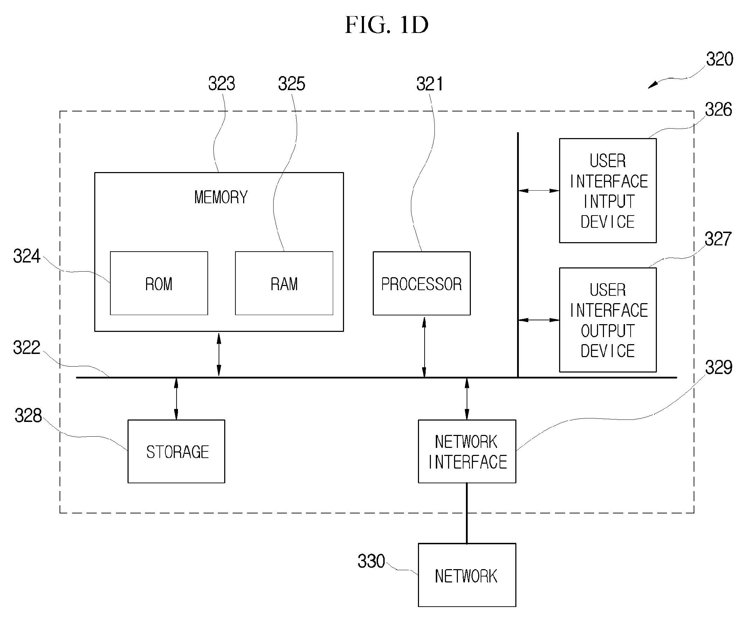

An embodiment of the present invention may be implemented in a computer system, e.g., as a computer readable medium. As shown in in Fig. 1D, a computer system 320 may include one or more of a processor 321, a memory 323, a user input device 326, a user output device 327, and a storage 328, each of which communicates through a bus 322. The computer system 320 may also include a network interface 329 that is coupled to a network. The processor 321 may be a central processing unit (CPU) or a semiconductor device that executes processing instructions stored in the memory 323 and/or the storage 328. The memory 323 and the storage 328 may include various forms of volatile or non-volatile storage media. For example, the memory may include a read-only memory (ROM) 324 and a random access memory (RAM) 325.

Accordingly, an embodiment of the invention may be implemented as a computer implemented method or as a non-transitory computer readable medium with computer executable instructions stored thereon. In an embodiment, when executed by the processor, the computer readable instructions may perform a method according to at least one aspect of the invention.

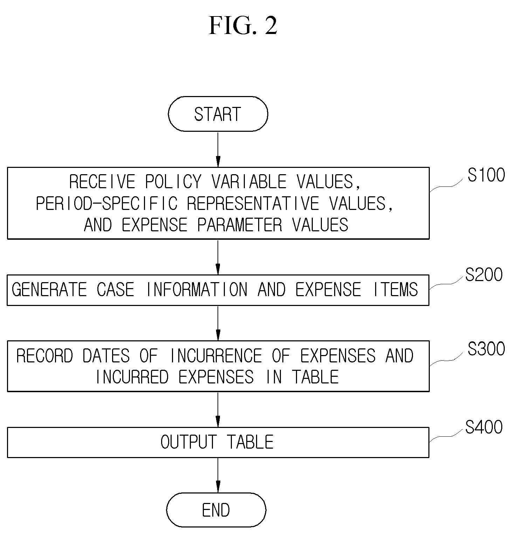

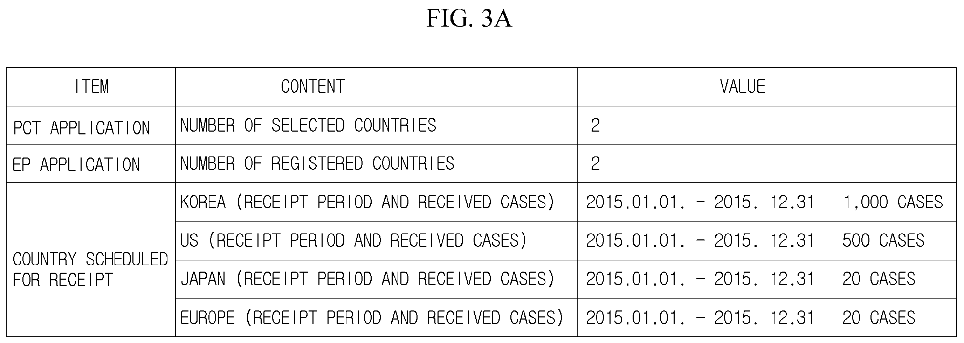

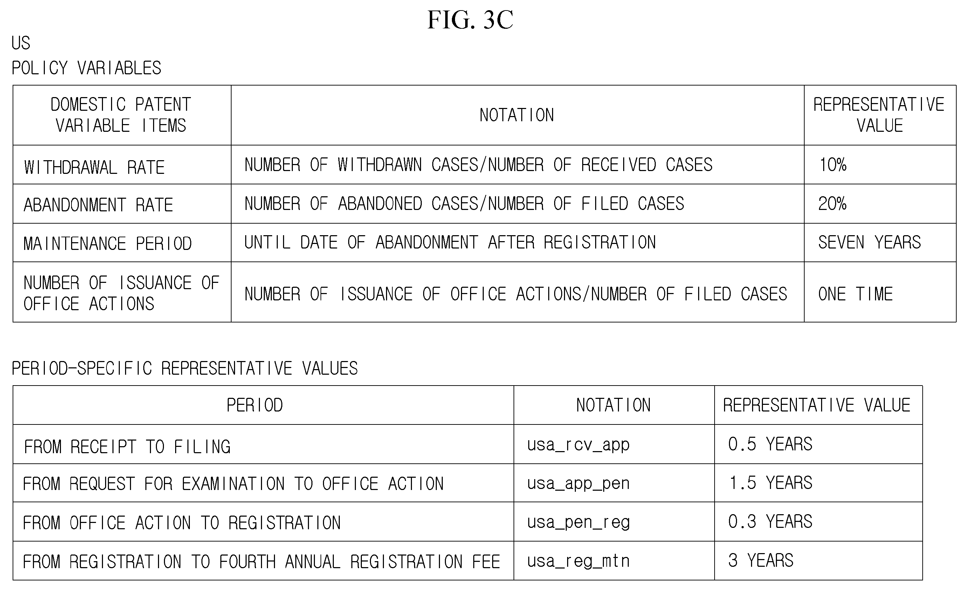

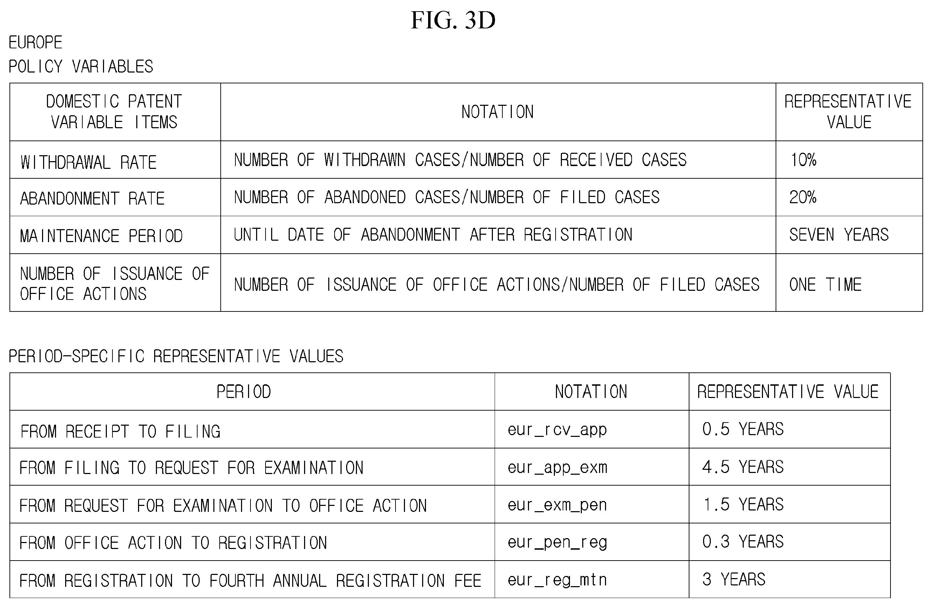

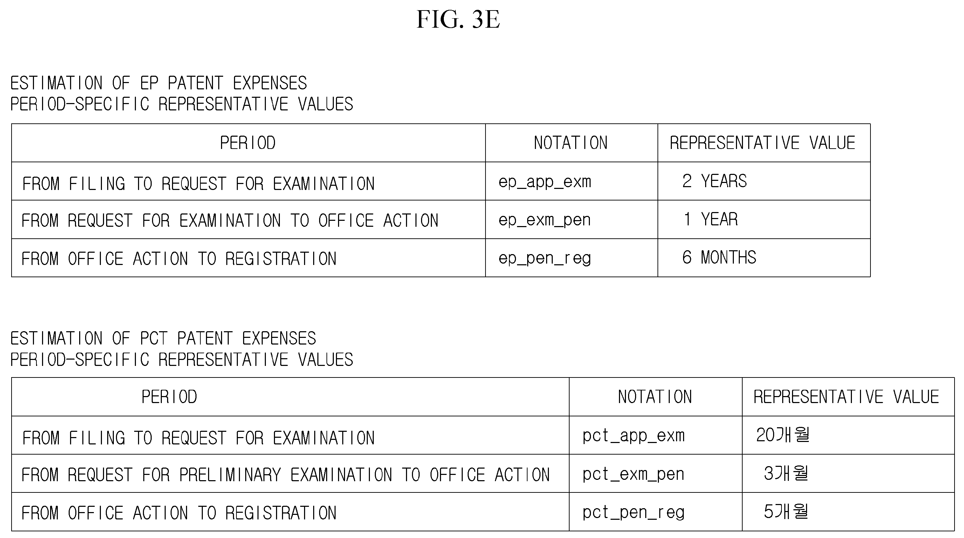

FIG. 2 is a flowchart illustrating a method of estimating a patent expense according to an exemplary embodiment of the present invention, and FIGS. 3A to 3F are diagrams showing display screens of a terminal to which policy variable values, period-specific representative values, and foreign exchange rates are input.

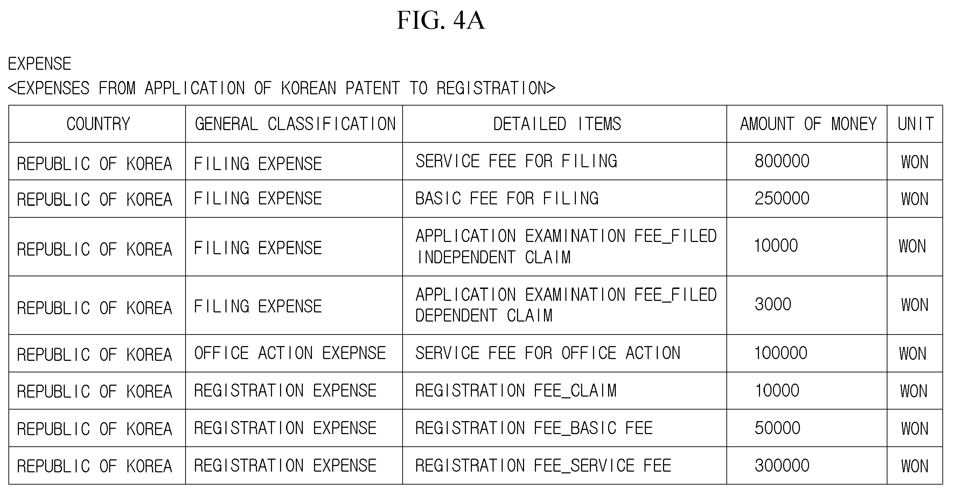

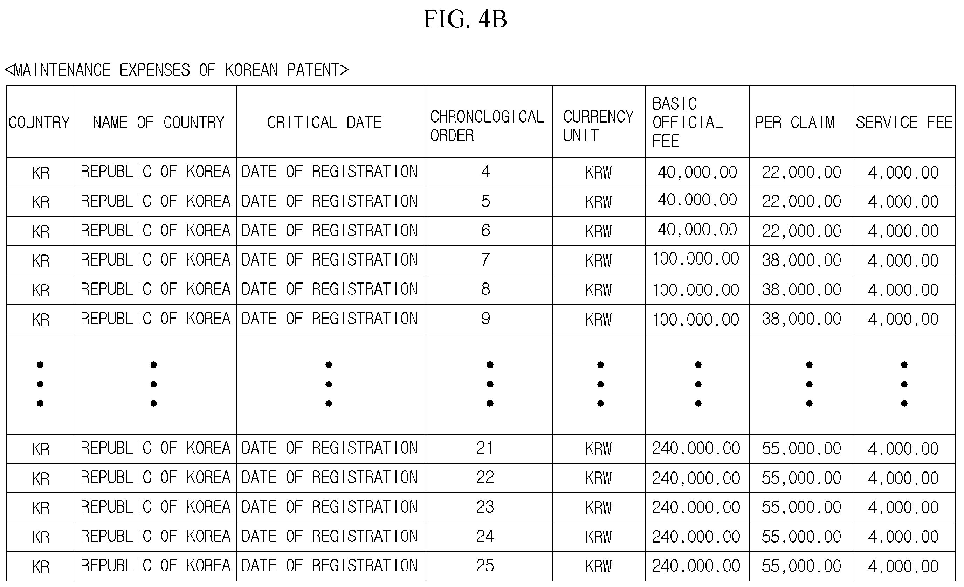

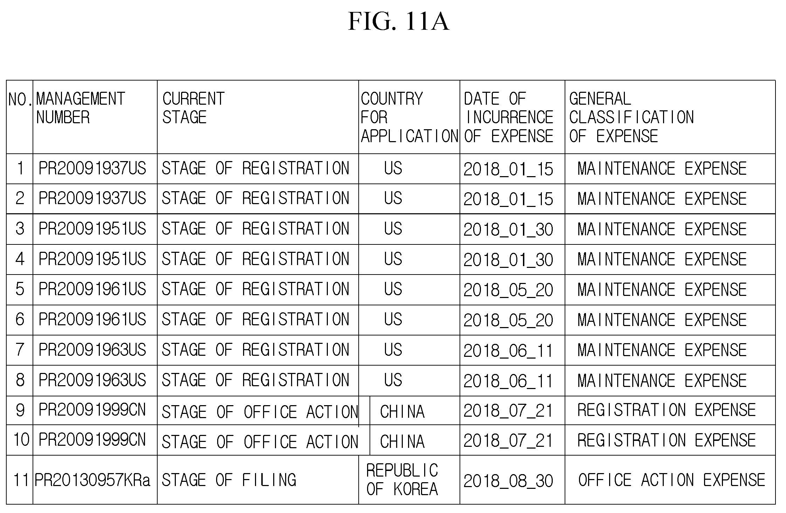

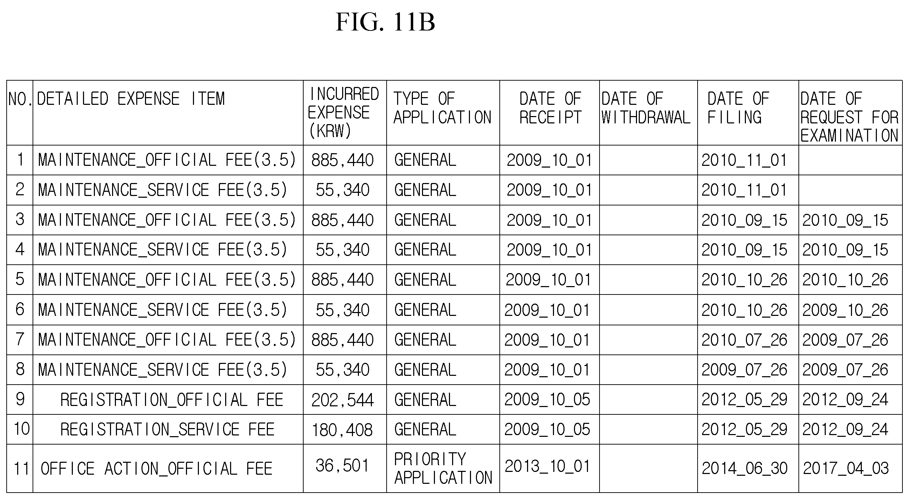

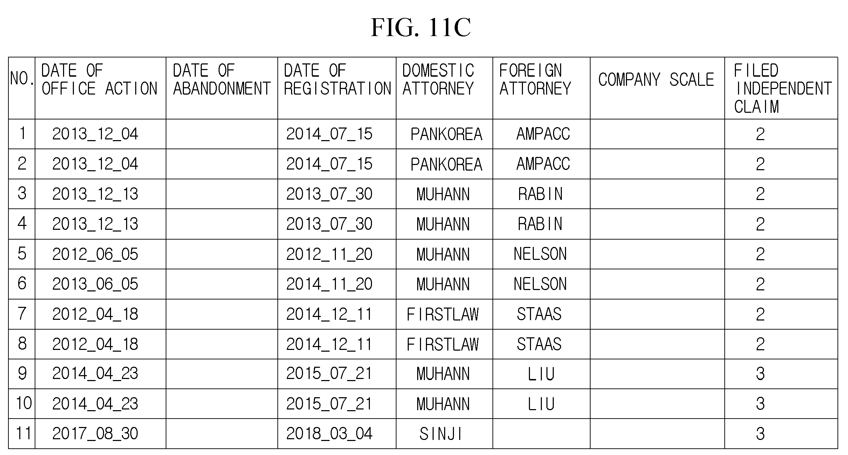

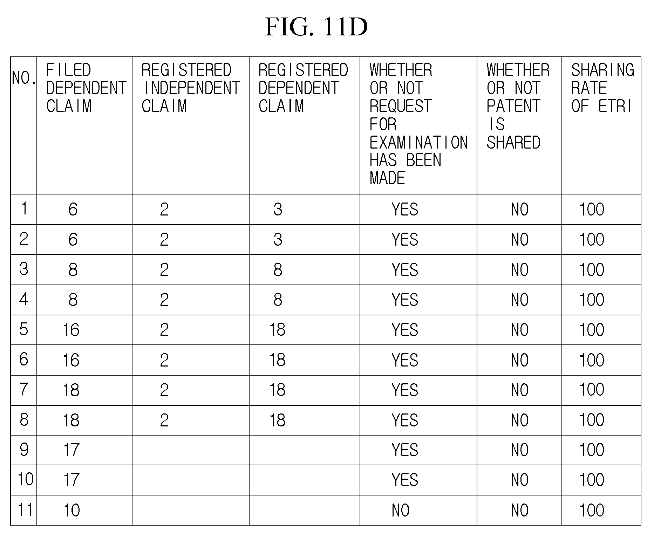

FIGS. 4 to 10 are diagrams showing country-specific procedures, and FIG. 11 shows examples of field values recorded in a table as output results.

### A. Operation of inputting policy variables, period-specific representative values, and exchange rates

When authentication is finished as an administrator account, a terminal 100 according to an exemplary embodiment of the present invention receives and transmits at least one type of values among policy variable values (common policy variable values and country-specific policy variable values), period-specific representative values, and expense parameter values.

The server 200 includes a data input unit 210, a table construction unit 220 and an output unit 230.

The data input unit 210 receives the at least one type of values among policy variable values, period-specific representative values, and expense parameter values when authentication with the terminal 100 is finished.

The table construction unit 220 calculates patent expense estimation results according to information on expense estimation settings.

The output unit 230 outputs a table constructed by the table construction unit 220 to provide the patent expense estimation results.

Here, data provided by the patent management system 250 may include a management number, a country, the title of the invention, dates of incurrence of expenses, the date of withdrawal, the date of abandonment, the type of an application, a domestic attorney, a foreign attorney, a company scale (large entity/small entity), the number of filed independent claims, the number of filed dependent claims, the number of registered independent claims, the number of registered dependent claims, whether or not an expense has been charged, an expense-sharing rate, a current stage, detailed items (official fees and service fees), the corresponding expense, and so on.

Among the data input through the input unit 210, the policy variable values are used to receive a case, which has not been received yet, in the future, and the data provided by the patent management system 250 is information on cases which have been received already and whose management numbers have been generated.

Therefore, FIG. 1A shows an exemplary embodiment of processing a case which is expected to occur in the future and whose management number has not been generated yet according to a policy variable value, and FIG. 1B shows an exemplary embodiment of processing cases which already have management numbers and are in states of receipt, filing, office actions, registration, and maintenance.

According to an exemplary embodiment of the present invention, it is possible to calculate the dates of incurrence of patent expenses and estimate expense items of the calculated dates of incurrence.

The policy variables, the period-specific representative values, and the expense parameter values are used to calculate the dates of incurrence of patent expenses and expense items.

The table construction unit 220 receives at least one type of values among the policy variable values, the period-specific representative values, and the expense parameter values and performs patent expense estimation.

In another exemplary embodiment, the table construction unit 220 may store the policy variables, the period-specific representative values, and the expense parameter values in a database, and calculate the dates of incurrence of patent prosecution related activity and patent expenses and expense items according to information on expense estimation settings received from the terminal 100.

The data input unit 210 according to an exemplary embodiment of the present invention receives country-specific received case information as policy variable values, that is, the numbers of received cases and receipt periods corresponding to country-specific categories.

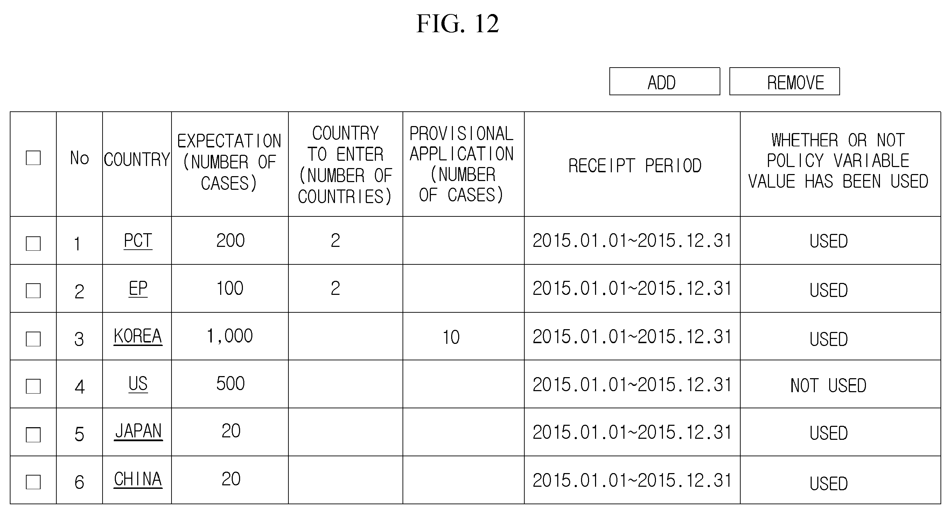

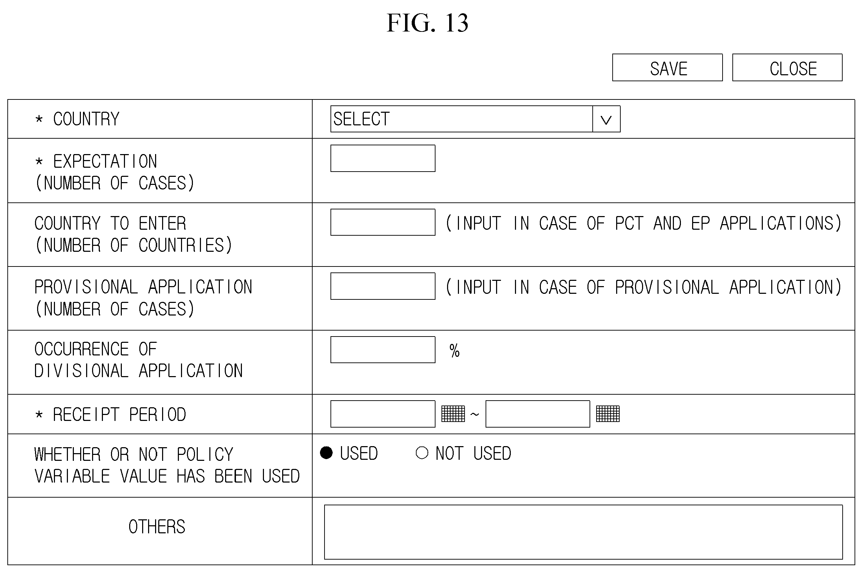

As shown in FIGS. 12 and 13, the data input unit 210 receives information on the expected numbers of cases, the numbers of countries to enter, the numbers of provisional applications, and receipt periods according to country-specific categories, such as patent cooperation treaty (PCT), European patent (EP), Korea, US, Japan, and China.

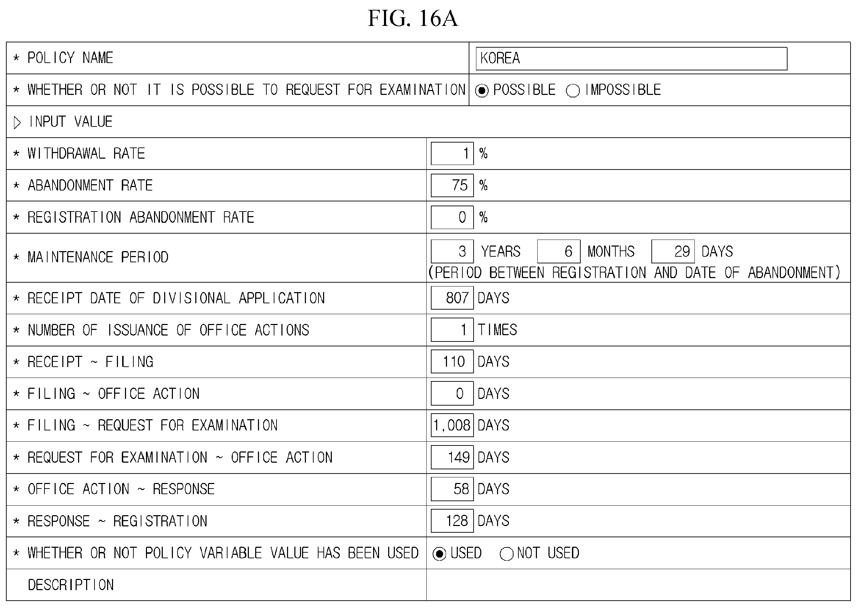

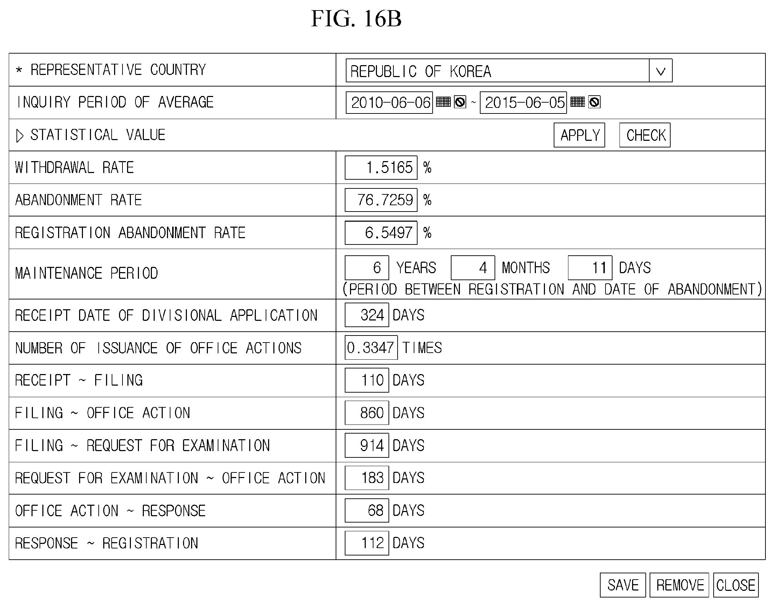

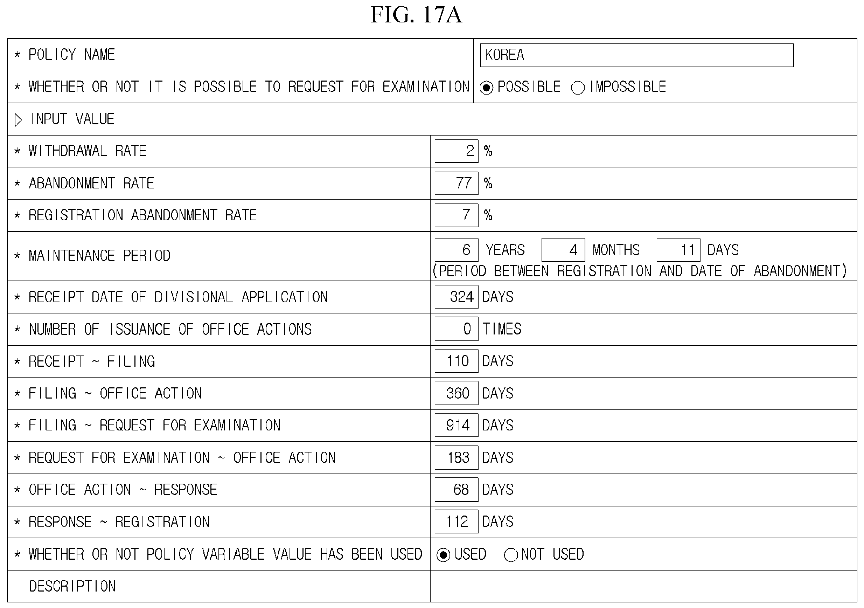

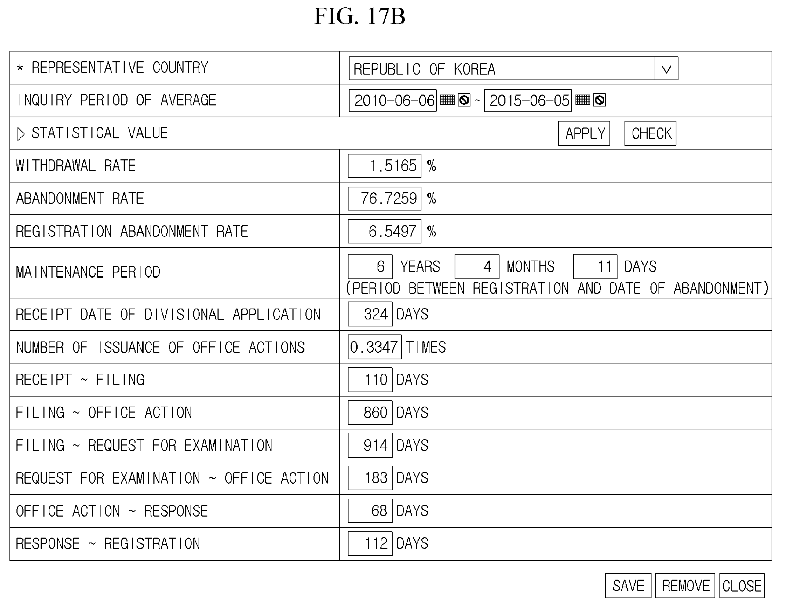

As shown in FIGS. 16 and 17, the data input unit 210 according to an exemplary embodiment of the present invention receives a withdrawal rate, an abandonment rate, the number of issuance of office actions as policy variable values, and receives setting information of a country category to which the corresponding policy is applied.

Also, the data input unit 210 according to an exemplary embodiment of the present invention receives, as period-specific representative values, information on period-specific days expected to be taken for a series of patent work processes, i.e., patent prosecution related activity, including receipt, filing, filing Information Disclosure Statement, request for examination, issuance of an office action, office action response, appeals, registration, and maintenance fees.

In other words, when "Check" is clicked in FIG. 16B, a statistical value is calculated, and when "Apply" is clicked, an input value is applied according to a predetermined setting (e.g., rounding off to a whole number) as shown in FIG. 17.

The data input unit 210 acquires country-specific expense information as expense parameter values. In other words, the data input unit 210 receives filing expenses according to countries, general classifications, and detailed items, and receives respective annual official fee information regarding maintenance expenses after registration.

FIGS. 3A to 3F show input screens of common policy variable values, country-specific policy variable values, foreign exchange rates, and expense parameter values.

Policy variable values are randomly input through a terminal which has been authenticated as an administrator account of a patent management department.

FIG. 3A shows an input screen of common policy variable values. For example, when a country scheduled for receipt is Korea, the receipt period is input as a time period from January 1, 2015 to December 31, 2015, and the number of received cases is input as 1000.

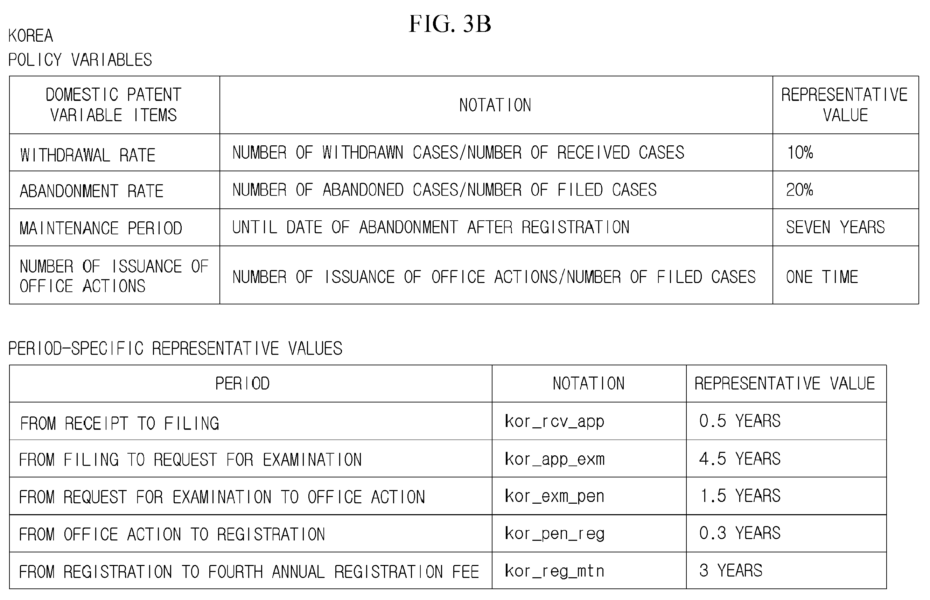

FIGS. 3B to 3E show country-specific policy variable values of Korea, US, Europe, EP, and PCT, and typical periods between filing, request for examination, issuance of an office action, registration, and maintenance are input as period-specific representative values.

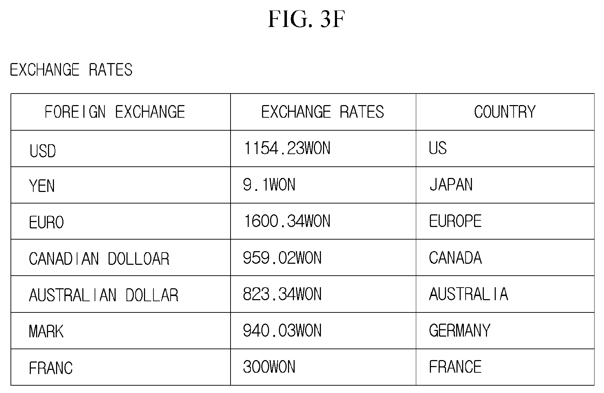

Referring to FIG. 3F, since exchange rates change every day, it is preferable for exchange rates to be automatically input, or it is preferable to read values from a web site for exchange rates.

FIG. 4 is a diagram showing item-specific expense information among expense parameter values. Item-specific expenses include detailed items, such as an official fee for filing, an attorney fee for filing, an official fee for an office action, an attorney fee for the office action, an official fee for registration, an attorney fee for registration, an official fee for maintenance, and an attorney fee for maintenance.

These item-specific expenses are hierarchically classified according to countries, stages (application-office action-registration-maintenance), and detailed items (official fees and service fees) in sequence.

### B. Processing operation

The initial stage of a patent work process is receiving proposed invention.

In other words, receiving porposed invention is performed before filing, it is determined whether or not to apply the corresponding invention for a patent, and then filing is performed.

Also, in Korea, a request for examination may be made at the same time as filing, or may be made after a predetermined period according to a strategy.

After a predetermined period in which an examiner examines the applied invention, office action (including notice of submission of opinion and decision of refusal) may occur.

The registration is obtained by paying a registration fee when there is no reason for rejection and a decision of registration is directly made, or when an office action is issued and the decision of registration is made by overcoming the examiner's reasons for rejection.

In Korea, patent rights are guaranteed only when annual maintenance expenses are regularly paid for 20 years from the date of filing.

In the case of pharmaceutical patents, it is possible to extend their registration once, and a maximum duration is 25 years.

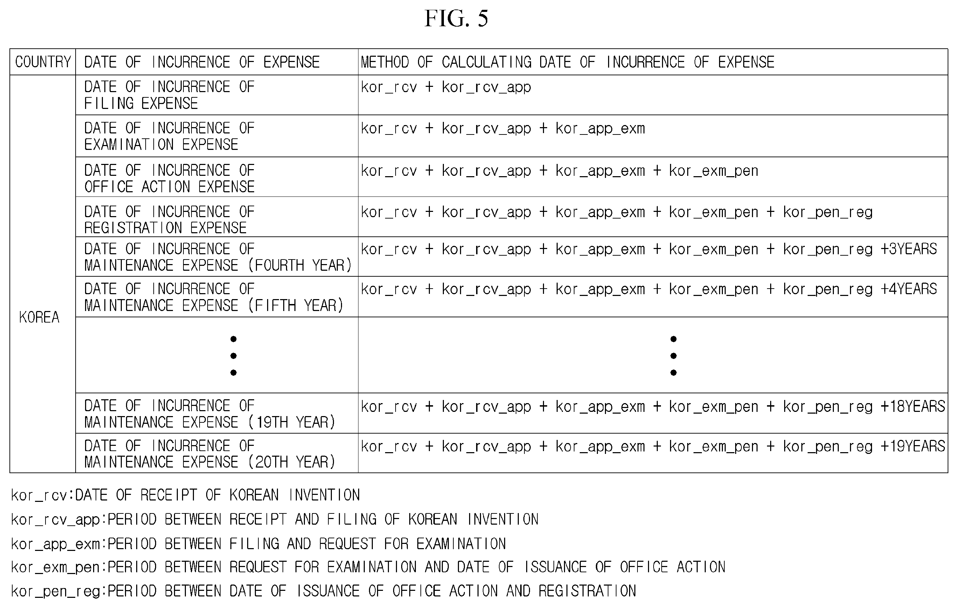

According to such a series of procedures, it is possible to calculate dates of incurrence of expenses as shown in FIG. 5.

FIG. 5 is a diagram showing dates of incurrence of Korean patent expenses in which kor_rcv denotes the date of receipt of a Korean invention, kor_rcv_app denotes a period between the date of receipt of the Korean invention and the date of filing, kor_app_exm denotes a period between the date of filing and the date of request for examination, kor-exm_pen denotes a period between the date of request for examination and the date of issuance of an office action, and kor_pen reg denotes a period between the date of issuance of an office action and the date of registration.

Assuming a case in which a maintenance expense is paid every year, dates of incurrence of expenses are calculated.

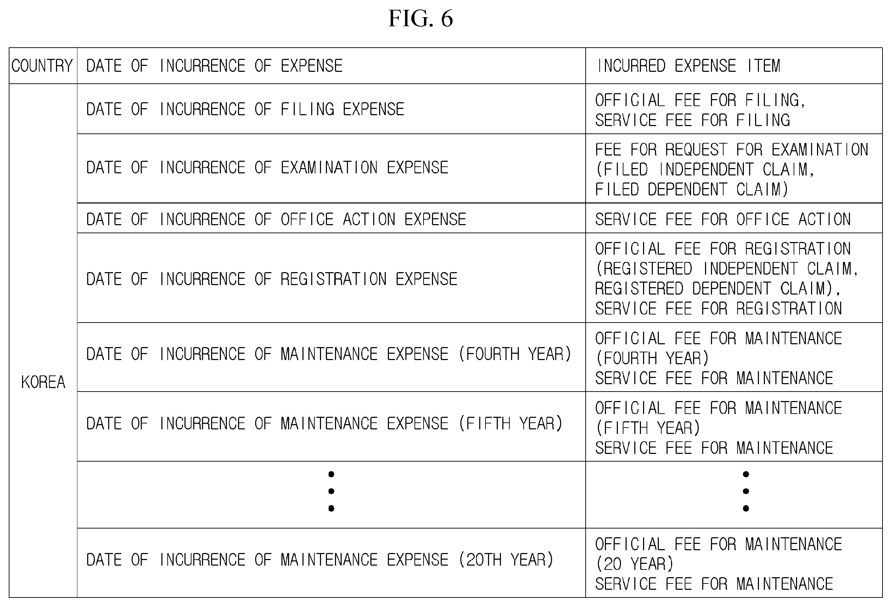

FIG. 6 shows expense items incurred on dates of incurrence of Korean patent expenses, and it is preferable to handle all these expense items as variables.

This is because attorney fees as well as service fees and annual official fees are frequently changed.

The dates of incurrence and costs shown in FIGS. 5 and 6 are randomly input.

This is because the information may be changed any time according to a policy of each organization, such as a research institute, a school, and a company, which intends to perform patent expense estimation.

According to the current status of a patent, expenses to be incurred are changed.

In other words, expenses to be added are changed according to the status of a patent.

For example, when there is only the date of receipt, dates of all events occurring after the date of receipt and all expenses corresponding to the dates are generated. When there is only the date of filing, dates of all events occurring after the date of filing and all expenses corresponding to the dates are generated. When there is the date of an office action, dates of all events occurring after the date of the office action and all expenses corresponding to the dates are generated. When there is the date of registration, dates of all events occurring after the date of registration and all expenses corresponding to the dates are generated.

In other words, dates of incurrence of expenses after a critical date (date of receipt, date of filing, date of request for examination, date of an office action, date of registration, dates of maintenance) and the items of incurred expenses are generated.

Here, an expense which has not been charged in spite of a critical date is generated as an expense item incurred on the critical date.

Dates of incurrence of expenses and incurred expenses generated in this way are recorded in a table.

As shown in FIG. 11, fields related to a table constructed by the table construction unit 220 include "Management number," "Country," "Title of invention," "Date of incurrence of expense (the date of receipt, the date of filing, the date of request for examination, the dates of office actions, the date of registration, and the date of maintenance)" "Date of abandonment," "Date of withdrawal," "Type of application," "Domestic attorney," "Foreign attorney," "Company scale," "Filed independent claims," "Filed dependent claims," "Registered independent claims," "Registered dependent claims," "Whether or not request for examination has been made," "Whether or not patent is shared" "Sharing-rate of ETRI," and so on.

It is possible to add or remove all the fields other than "date of incurrence of expense" and "incurred expense" according to whether or not the fields are used.

Since all countries have different patent work processes, the payment form of expenses is set to be different according to countries in principle, but there are a significant number of countries having similar payment forms of expenses.

In Korea, a date when a registration fee is paid is referred to as the date of registration. In US, the date of issuance is referred to as the date of registration, and in Europe, the date of grant is referred to as the date of registration.

However, throughout the drawings of the present invention, the date of registration is uniformly indicated by the notation "reg."

For convenience of description, the date of registration is used, but it means the date of issuance in US and the date of grant in Europe.

A method estimating a patent expense will be described below using examples according to countries.

First, in the case of Korea, the dates of incurrence of expenses and the items of expenses incurred on the dates of incurrence of expenses are as shown in FIGS. 4 to 6.

Referring to a received case, the predetermined period kor_rcv_app is taken (e.g., deliberation on the invention) according to an internal progress procedure after the date of receipt kor_rcv, and filing to the patent office is performed after a specification is finished.

Therefore, a first filing expense is incurred on the date of filing.

Here, filing expenses may be classified as an official fee and a service fee, and the items may be subdivided in more detail.

Filing expenses may be integrated or divided according to the intention of a system designer.

For example, the service fee item may be subdivided into an attorney's basic service fee, an attorney fee dependent on the number of drawings, an attorney fee dependent on the number of pages of a specification, and so on.

Also, the official fee item may be subdivided into a basic official fee, an official fee dependent on the number of claims, and so on.

Second, upon a request for examination, an expense is incurred for the request for examination.

Third, when an office action is issued, the item "Issuance date of office action" and the item "Office action expense" are generated.

Fourth, upon registration, an expense for the registration is incurred and the date of registration is generated.

In Korea, an official fee for three years is paid to the Korean Intellectual Property Office at one time upon registration, and thus registration fees for three years are paid in a lump sum.

Subsequently, a maintenance fee for the fourth year is paid three years after the date of registration, a maintenance fee for the fifth year is paid four years after the date of registration, and a maintenance fee for the sixth year is paid five years after the date of registration.

In this way, the patent right continues to exist for a maximum of 20 years from the date of filing.

Here, maintenance expenses are not calculated up to the maximum duration, and a number of dates of incurrence of maintenance expense and a number of expense items corresponding to an expected duration are generated.

When there is the date of filing in the current status, the date of request for examination, an expense for the request for examination, the date of an office action, an expense for the office action, the date of registration, an expense for the registration, the date of a maintenance expense, and the maintenance expense are generated.

When there is the date of an office action in the current status, the date of registration, an expense for the registration, the date of a maintenance expense, and the maintenance expense are generated.

When there is the date of registration in the current status, the date of a maintenance expense and the maintenance expense are generated.

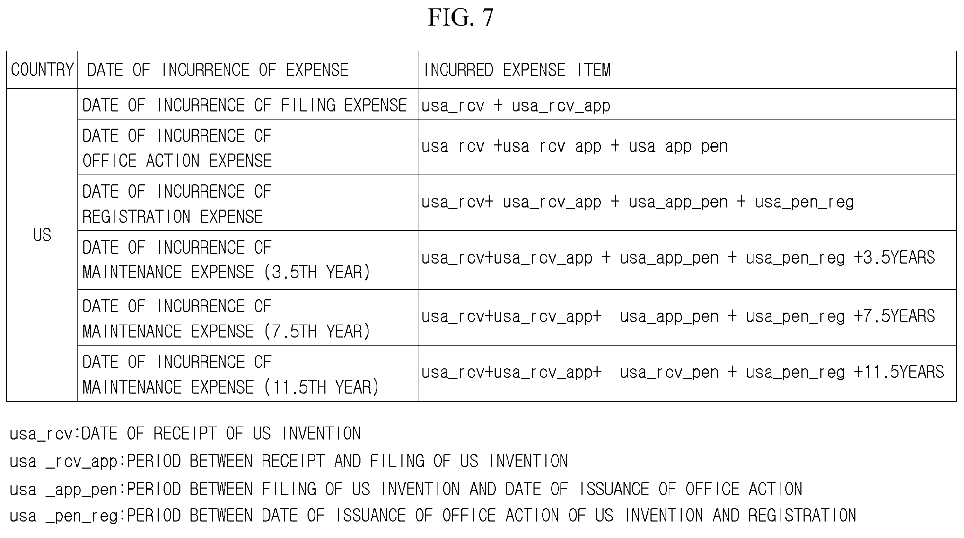

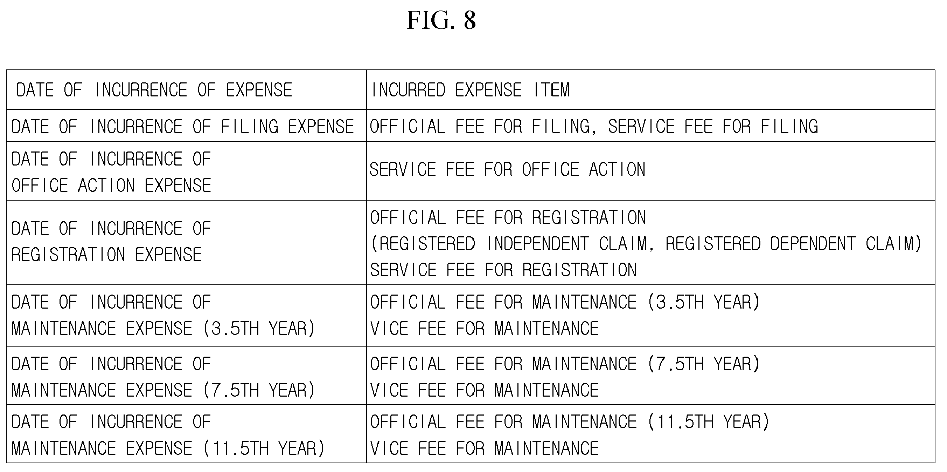

Second, in the case of US, the dates of incurrence of expenses and the items of expenses incurred on the dates of incurrence of expenses are as shown in FIGS. 7 and 8.

In Korea, a period is generally determined according to whether or not a request for examination is made. On the other hand, no request for examination is additionally made in US, and no expense is incurred on the date of request for examination.

The US patent system is similar to the Korean patent system except that maintenance expenses are incurred 3.5 years, 4.5 years, and 11.5 years after the date of registration.

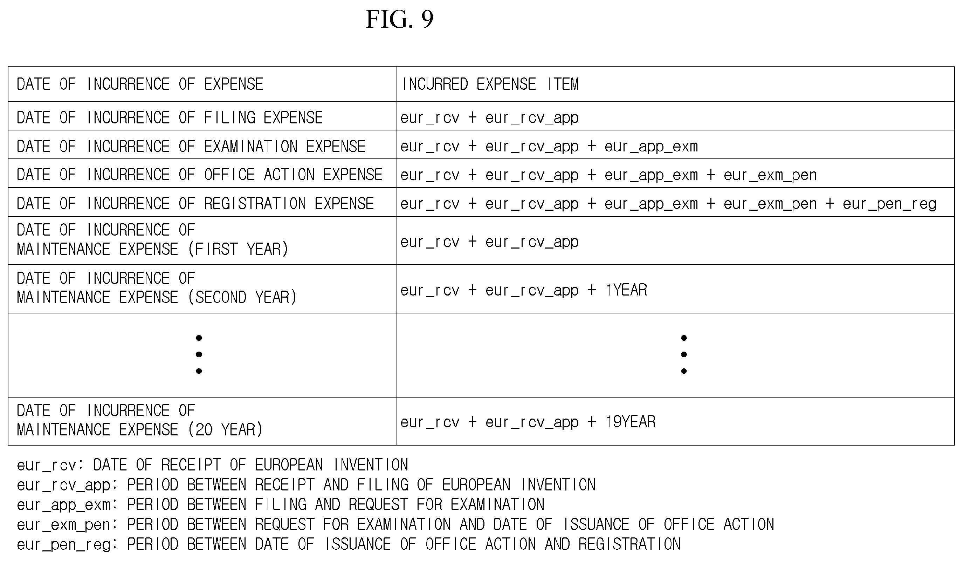

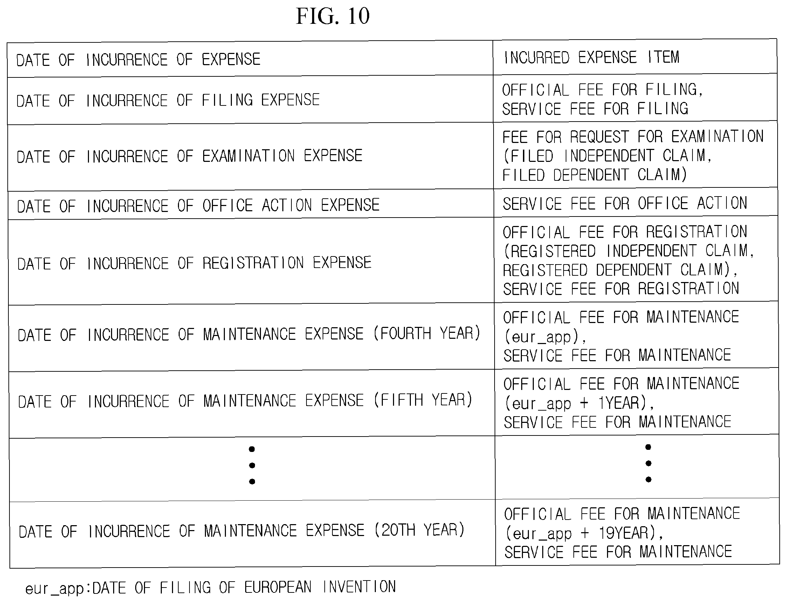

Third, in the case of European countries, the dates of incurrence of expenses and expense items are as shown in FIGS. 9 and 10.

The European patent system is peculiar in that an annual expense for filing is incurred before registration, a registration maintenance expense is incurred after registration, and periods are calculated based on the date of filing.

Also, in the case of EU (European patent office (EPO)), entry into each country is allowed after registration.

In the case of PCT, the date of PCT filing, a filing expense, the date of an office action, and an office action expense are generated, and a procedure similar to that of each country proceeds in an individual country (domestic) entry stage.

There are typical country's dates of incurrence of patent expenses and incurred expenses, but it is possible to freely modify them according to an operating method resulting from a change in policy.

The core of the technical spirit of the present invention is to estimate a patent expense through a specific expense to be incurred on a specific date.

Also, the core is to facilitate calculation of expenses to be incurred in a specific period by setting information to be checked.

The US patent system does not charge a maintenance expense every year and thus is a different type from the Korean and Japanese patent systems. European countries charge a registration maintenance expense after registration based on the date of filing and thus are a different type from the Korean, Japanese, and US patent systems.

Therefore, a system for estimating patent prosecution related activity and a patent expense according to an exemplary embodiment of the present invention can handle all countries by changing a parameter value.

Thus far, the basic principle of patent expense estimation of the present invention has been described, and according to an exemplary embodiment of the present invention, it is possible to add the following functions and extend functions.

First, inventions desired to be applied for patents are received, but all the inventions are not applied. Therefore, it is possible to accurately estimate an expense incurred according to a policy by considering a pre-filing abandonment rate and a post-filing abandonment rate.

In other words, a method of processing all cases while processing registration and maintenance expenses for one case as (corresponding expense)×(1 - pre-filing abandonment rate) × (1 - post-filing abandonment rate) may be an example of using the pre-filing abandonment (withdrawal) rate and the post-filing abandonment rate.

Second, several extended functions may also be used to process office action expenses.

There is a method of processing entire office actions with one expense, and a method of dividing the office actions as first, second, ..., and N^{th} office actions and processing office action expenses by inputting expenses incurred for the respective office actions.

However, it is preferable to divide office actions as first, second, ..., and N^{th} office actions and process office action expenses by generating N dates and dividing a total office action expense by N rather than to process the total office action expense at one time on a specific date.

Third, in the case of joint application, all expenses are not incurred, and expenses incurred according to a contract share are calculated in consideration of an expense-sharing rate.

By adding several such extended functions, a table is generated as shown in FIG. 11. Fields recorded in the table exemplified in FIG. 11 include "Management number," "Country," "Title of invention," "Date of incurrence of expense (the date of receipt, the date of filing, the date of request for examination, the dates of office actions, the date of registration, and the date of maintenance)" "Date of abandonment," "Date of withdrawal," "Type of application," "Domestic attorney," "Foreign attorney," "Company scale," "Filed independent claims," "Filed dependent claims," "Registered independent claims," "Registered dependent claims," "Whether or not request for examination has been made," "Whether or not patent is shared" "Sharing-rate of ETRI," and so on.

It is possible to create a database schema having several table structures from these fields, but it is preferable to record all the fields in one table as much as possible.

When there are a small number of managed cases, it is possible to generate a table as necessary according to each circumstance. On the other hand, when there are a large number of cases to be managed in patent management, it is preferable for a server to process all cases at one time according to a previously set setting (e.g., at 10 PM every day) and record set field values in a table in advance.

### C. Operation of outputting results

A search condition is generated by combining fields.

For example, when a user wants to know all expenses which are expected to be incurred between January 1, 2015 and December 31, 2017, the user inputs January 1, 2015 as a start date and December 31, 2017 as an end date among dates of expenses in a search condition, thereby carrying out a search.

Since the dates of incurrence of patent prosecution related activity and expenses and incurred expenses have been calculated for all patents according to stages in the processing operation described above, the dates of incurrence of expenses satisfying the search condition are found and output.

Fields may be arranged in order of year, country, stage, and total expense, or in order of country, year, stage, and total expense.

It is preferable to design the system so that all statistical values resulting from expense estimation can be downloaded as data of Microsoft Excel, and an exemplary embodiment according to such an operation of outputting results will be described in further detail below.

The output unit 230 according to an exemplary embodiment of the present invention provides patent expense estimation results according to the table constructed by the table construction unit 220 and a selected output method according to cases, years, or so on.

Also, the output unit 230 provides information on a processing date, a processing time, and whether or not an error has been occurred in relation to calculation of the patent expense estimation results.

According to an exemplary embodiment of the present invention, it is possible to reliably estimate patent expenses based on a policy, and to correct an error through a feedback loop by checking error information generated in the estimation process.

In addition, a simulation according to a change in policy is performed by calculating patent expense estimation results, so that efficiency in patent expense management can be increased.

### II. Second stage (implemented embodiments)

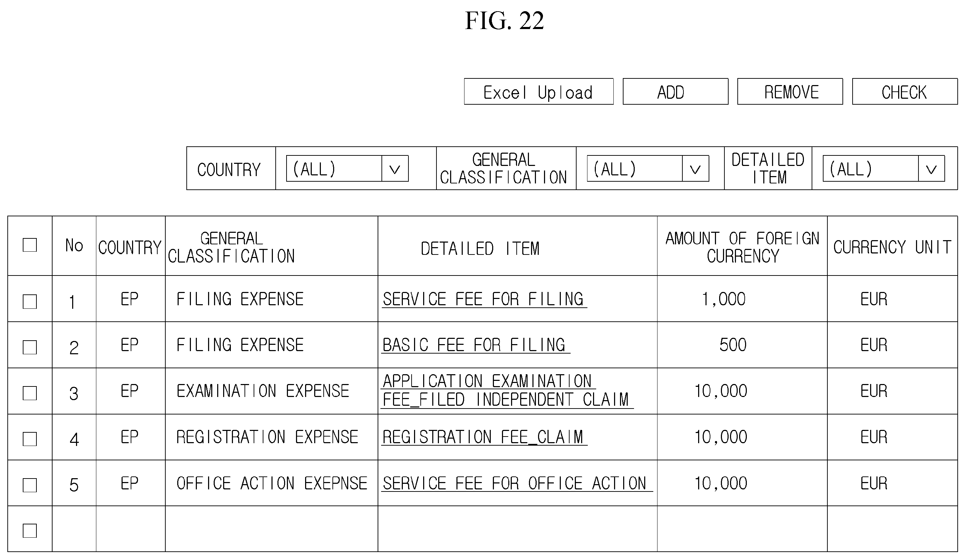

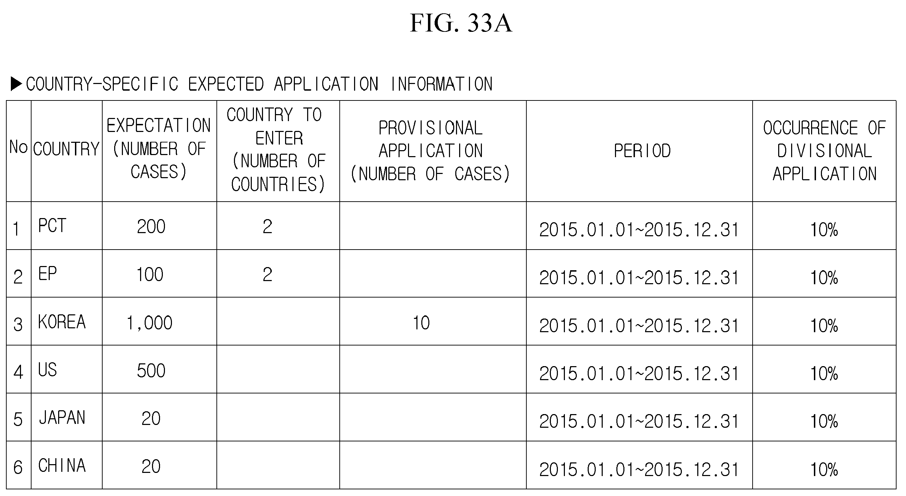

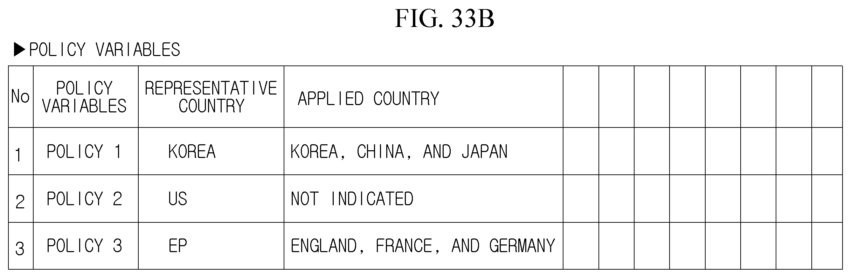

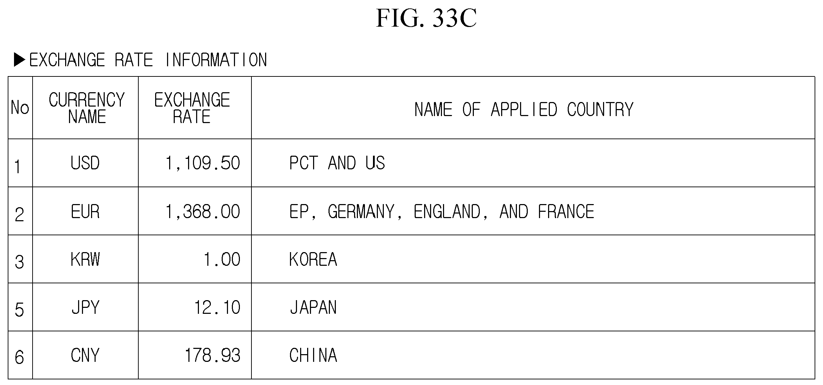

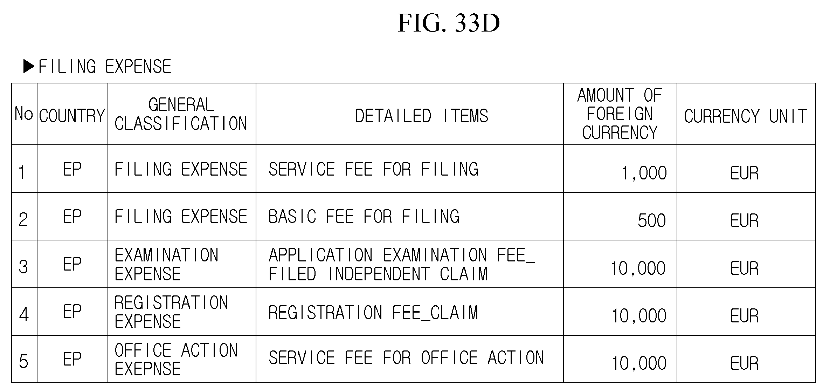

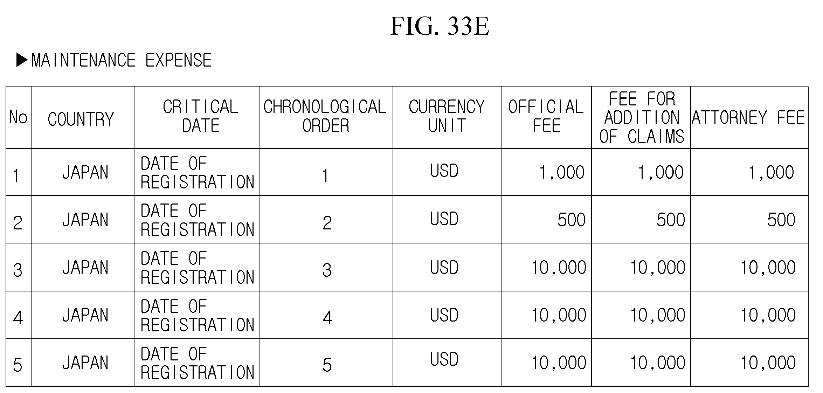

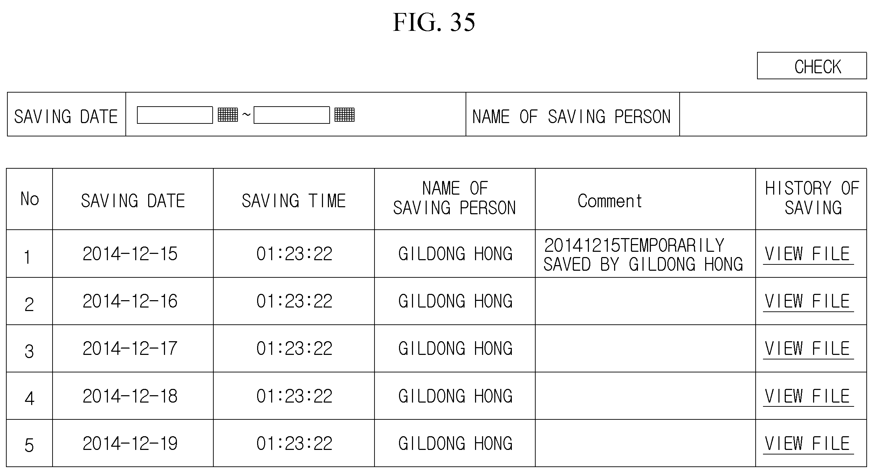

FIGS. 11 to 35 are diagrams showing a series of processes based on a method of estimating patent prosecution related activity and a patent expense according to an exemplary embodiment of the present invention on a display screen provided to a user.

With reference to the drawings, an exemplary embodiment of the present invention will be described in detail below.

A method of estimating patent prosecution related activity and a patent expense according to an exemplary embodiment of the present invention includes an operation of receiving at least one type of values among policy variable values, period-specific representative values, and expense parameter values regarding an received case, and an operation of calculating the dates of incurrence of expenses for the received case using the received data, and calculating and outputting incurred expense items matched with the dates of incurrence of expenses.

An expense estimation administrator accesses a patent expense estimation server with an administrator account through a terminal and inputs common policy variable values.

As country information of common policy variable values, PCT, EP, Korea, US, Japan, China, etc. are input, and information on the expected number of cases, the number of countries to enter, the number of provisional applications, a receipt period, and whether or not common policy variables have been used is input.

As shown in FIG. 13, according to an exemplary embodiment of the present invention, policy variable values including countries, an expected number of cases, the number of countries to enter, the number of provisional applications, the occurrence of divisional applications, a receipt period are received (S100).

Here, it is required to input the number of countries to enter when country information is PCT or EP. An integer equal to or less than 100 is input as the occurrence of divisional applications, and "Used" is set as a default value of whether or not common policy variables have been used.

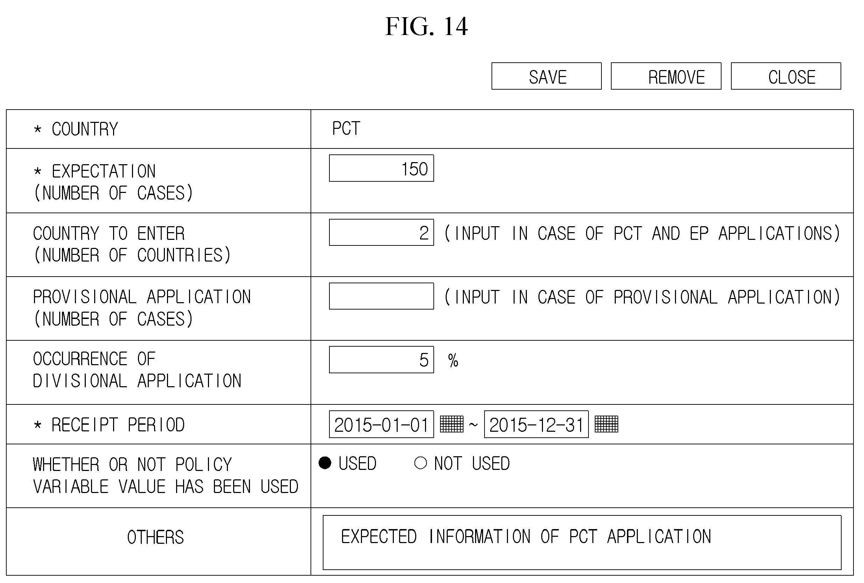

FIG. 14 is a diagram showing a screen for modifying country-specific policy variable values. According to an exemplary embodiment of the present invention, an operation of modifying and inputting a registered policy variable value is included (S100).

At this time, it is possible to calculate statistical values of policy variable values and period-specific representative values.

In other words, when it is intended to use statistical values as input policy variable values and input period-specific representative values, it is possible to apply the statistical values to inputs according to a previously set method (e.g., rounding off to the nearest tenth) by clicking "Apply" on a user interface (UI) as shown in FIGS. 16 and 17.

According to information received from the terminal accessing with the administrator account, the expense estimation server modifies country-specific policy variable values by storing the corresponding input content or removing information.

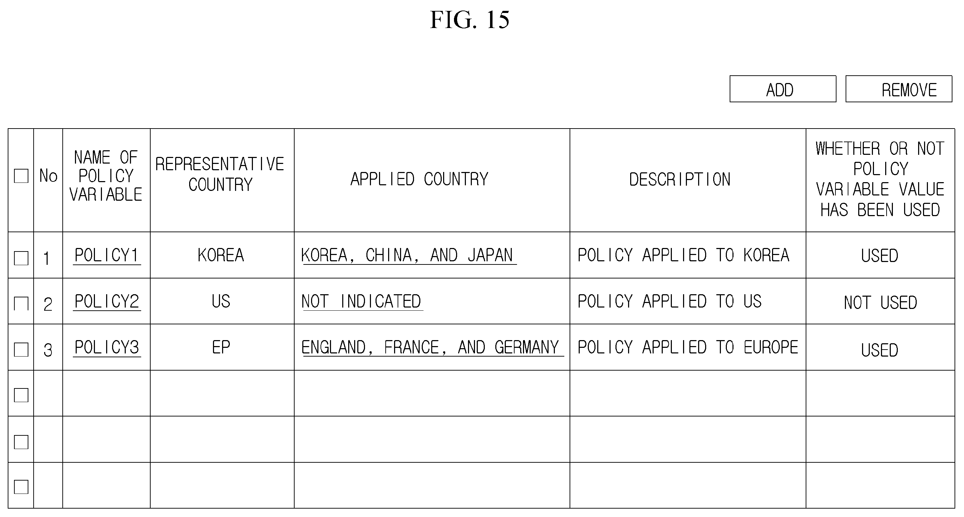

FIG. 15 is a diagram showing a list of policy variables according to an exemplary embodiment of the present invention. According to the policy variable list shown in FIG. 15, information on the names of policy variables, representative countries, countries to which the corresponding policies are applied, descriptions of the corresponding policies, and whether or not the corresponding policy variables have been used.

According to an exemplary embodiment of the present invention, category-specific policy variable values are received regarding received cases.

When received cases are determined according to countries, it is required to determine management numbers and dates of receipt corresponding to the received cases.

There are several statistical methods of setting dates of receipt.

The dates of receipt may be set uniformly or randomly.

When the dates of receipt are set uniformly and a policy is determined to receive 1,460 cases for two years by way of example, a total of 1,460 cases are generated, and two of management numbers corresponding to the cases are generated every day.

Also, two dates of receipt matched with the corresponding management numbers are generated.

According to an exemplary embodiment of the present invention, a critical date may be the date of filing rather than the date of receipt. In this case, the corresponding management numbers and date of filing are generated, and the generation method has been described above.

As shown in FIGS. 16 and 17, policy variable values including a withdrawal rate (an abandonment rate before filing) indicating a ratio of the number of withdrawn cases to the number of received cases, an abandonment rate indicating a ratio of the number of abandoned cases to the number of filed cases regarding expected application information, and a rate of issuance of office actions indicating a ratio of the number of issued office actions to the number of filed cases regarding the expected application information are received.

Also, information on periods taken between critical dates is received.

FIGS. 16 and 17 show examples to which data extracted from data in a patent management system using a statistical method is applied, and show values before modification and values after modification, respectively.

Since statistical values are changed over time, an administrator determines whether or not to apply data changed accordingly.

It is also possible to artificially adjust and input data values according to a policy. Statistical values are good examples showing an overall trend, but whether or not to apply the statistical values is determined by a selection of the administrator.

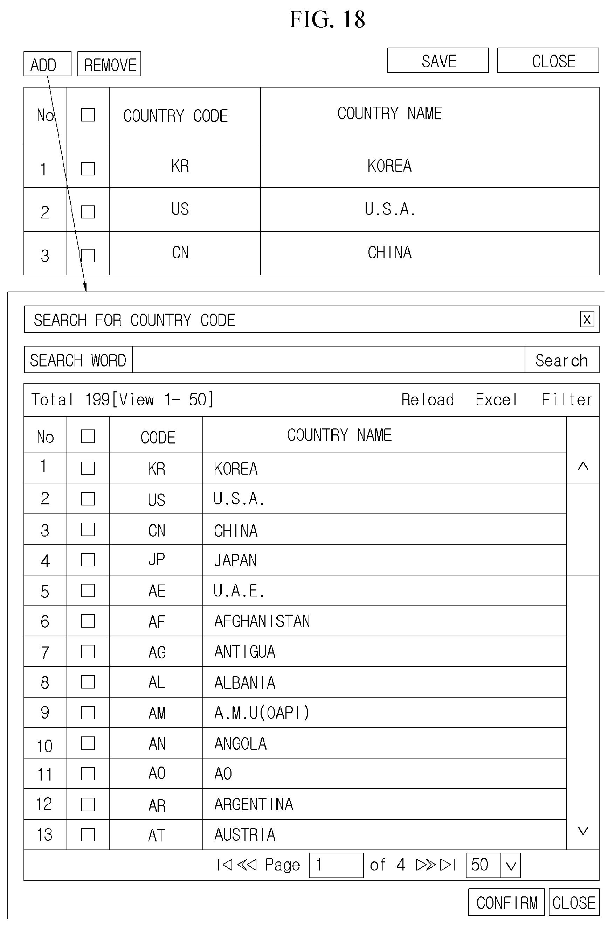

As shown in FIG. 18, according to an exemplary embodiment of the present invention, selection information of a country to which a policy is applied is received.

When the selection information of a country to which a policy is applied is received, it is possible to apply only one policy to each country. Therefore, when overlapping input of the selection information for policy application is attempted to a country to which a policy has already been applied, the already-applied policy is released, and then a notification message indicating that it is possible to apply a new policy is provided through a terminal screen.

Period-specific representative values received in operation S100 according to an exemplary embodiment of the present invention are period-specific representative values received in relation to a series of processes, i.e., patent prosecution related activity, including events of receipt, filing, request for examination, issuance of an office action, office action response, registration, and maintenance.

As shown in FIGS. 16 and 17, stage-specific dates expected to be taken for the series of processes including events of receipt, filing, request for examination, issuance of an office action, office action response, registration, and maintenance are received as period-specific representative values.

In other words, periods between the date of receipt and the date of filing, between the date of filing and the date of request for examination, between the date of request for examination and the date of issuance of a first office action, between the date of issuance of the first office action and the date of a final office action response, between the date of the final office action response and the date of registration are input as period-specific representative values, and these period-specific representative values are used in a process of calculating the dates of patent prosecution related activity and incurrence of expenses and generating expense items.

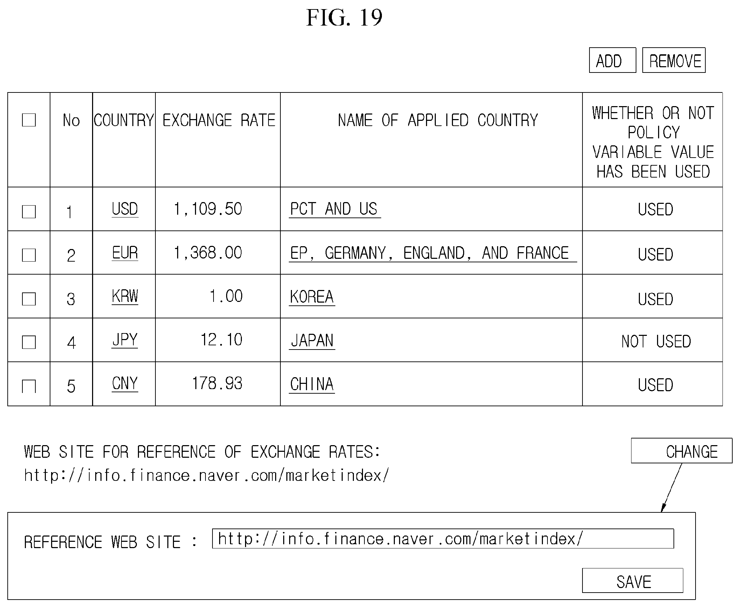

Also, in operation S100 according to an exemplary embodiment of the present invention, item-specific expense information which has already been classified according to events and expense parameter values including category-specific currency units and exchange rate information of the category-specific currency units are received as shown in FIGS. 19 to 24.

As shown in FIG. 19, in operation S100, addition or removal commands for currency names, such as USD, EUR, KRW, JPY, and CNY, are received, and a web site for reference to exchange rates is provided to receive exchange rate information from the administrator terminal.

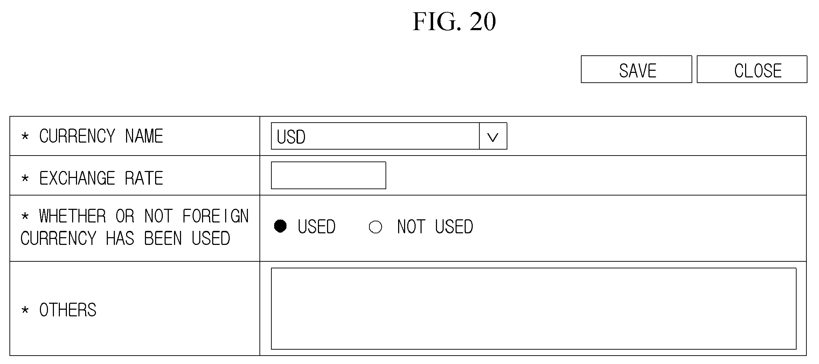

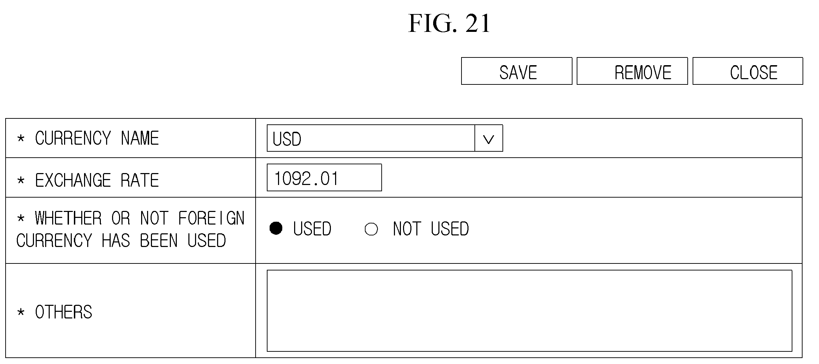

Further, in operation S100, selection information of a currency name, exchange rate information of the selected currency, and information about whether or not the selected currency has been used are received from the administrator terminal as shown in FIGS. 20 and 21.

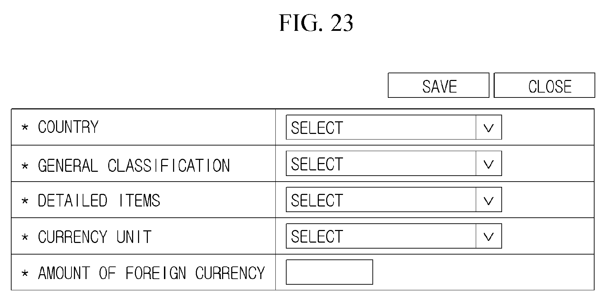

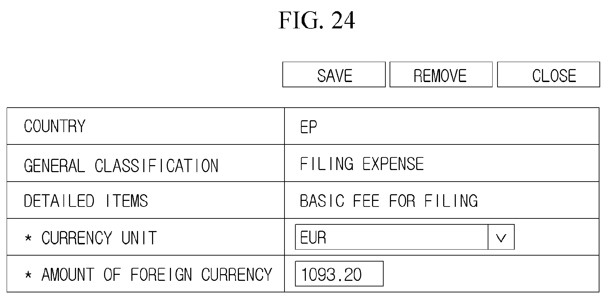

In operation S100 according to an exemplary embodiment of the present invention, expense items which include filing expense, examination expense, office action expense, and registration expense as general classifications and include service fees and basic fees of the respective general classifications as subdivided items are received as expense parameter values regarding country-specific expected application information as shown in FIGS. 23 and 24.

Here, the expense items are uploaded through an Excel file at one time, and a country code, a generally classified name, a detailed item name, the amount of a foreign currency, and a currency unit are uploaded as the uploaded items.

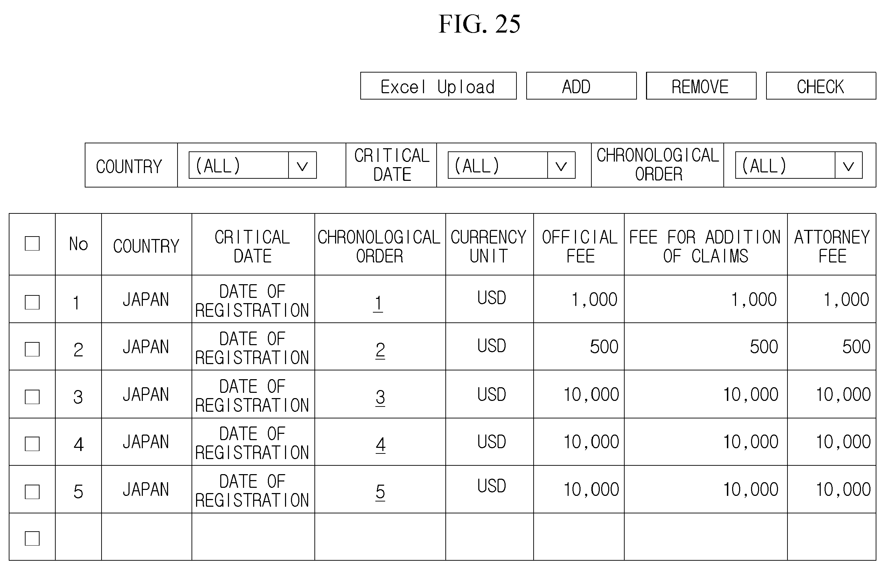

When a selection is made by clicking a detailed item shown in FIG. 23, a modification screen shown in FIG. 25 pops up and is displayed. Through this process, modification information of expense parameters is received.

In operation S100 according to an exemplary embodiment of the present invention, maintenance expenses are received as an expense parameter value.

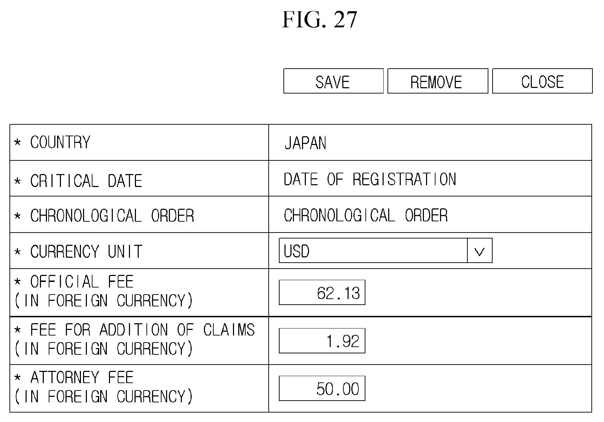

As shown in FIGS. 25 and 27, in operation S100, selection information of each menu tab is received from the terminal of the expense estimation administrator, and maintenance expenses are uploaded through an Excel file at one time.

Here, uploaded items include a country code, a critical date, a chronological order, a currency unit, an official fee, a fee for adding a claim, and an attorney fee.

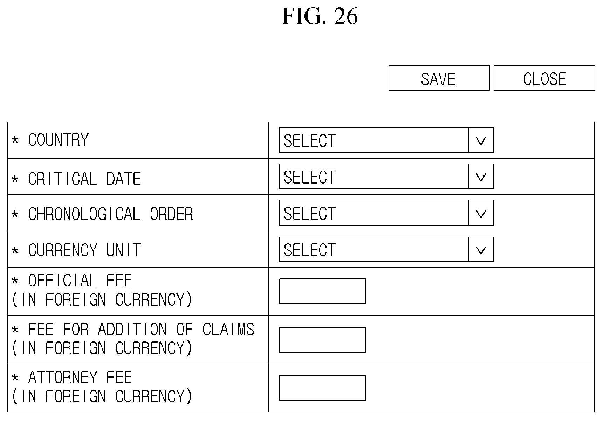

In operation S100, country-specific maintenance expense information is received, and when the chronological order item is clicked, a modification screen shown in FIG. 26 pops up and is displayed. In operation S100, modification information of such an expense parameter value is received.

When there is no country selection from the terminal having logged in with the account of the expense estimation administrator, maintenance expenses of the first year to the 25^{th} year are shown in FIG. 25.

When a country selection is made from the terminal having logged in with the account of the expense estimation administrator, maintenance expenses of the corresponding country according to chronological orders are input.

In an exemplary embodiment of the present invention, the dates of incurrence of expenses and expense items matched with the dates of incurrence of expenses are generated in relation to received cases using policy variable values, period-specific representative values, and expense parameter values according to information on expense estimation settings (S200), a table is constructed using the dates of incurrence of expenses and the expense items (S300), and the table is output according to an output method included in the information on expense estimation settings (S400).

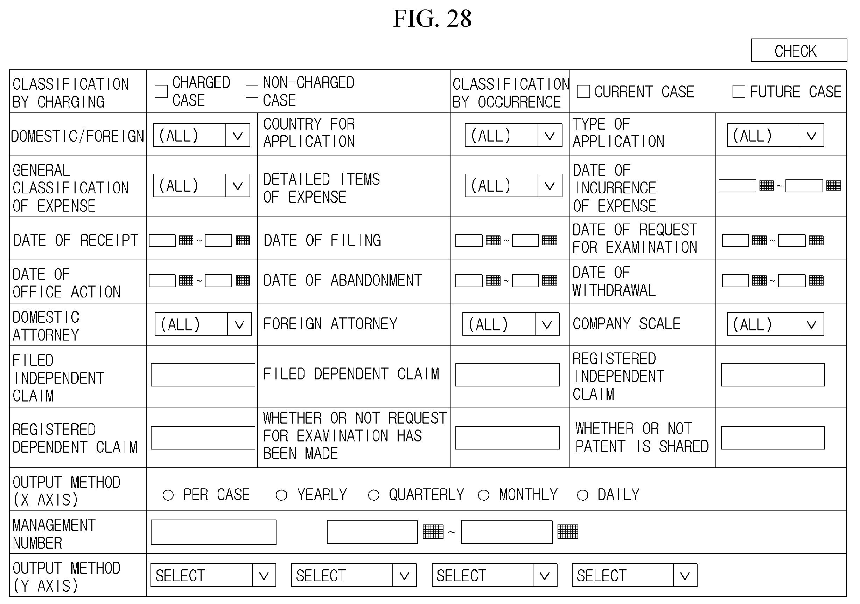

FIG. 28 is a diagram showing a screen to which information on expense estimation settings is input. From a terminal having logged in with the account of the administrator or a user, information about classification by charging and classification by occurrence is received.

Also, whether an invention is a domestic or foreign application, a country for application, an application type of a master ledger such as a general application or a divisional application, generally classified expense information, detailed expense item information, period setting information, attorney information, company scale information, output method information, etc. are received.

In an exemplary embodiment of the present invention, expense items incurred from expected application information are summed and output according to the selection information of classification by charging and the selection information of classification by occurrence included in the information on expense estimation settings.

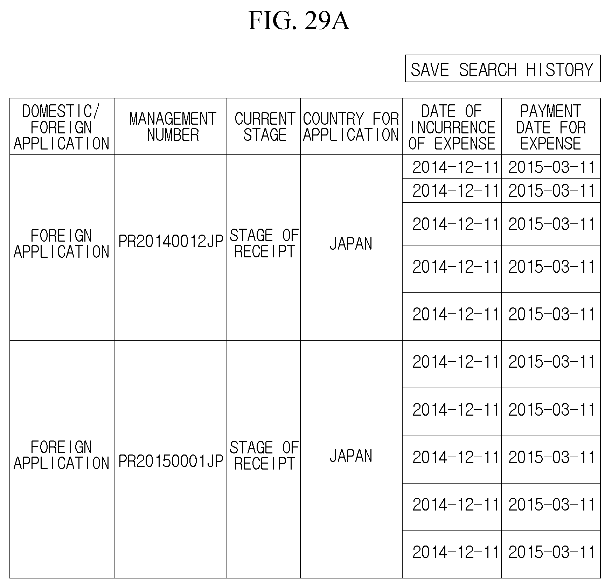

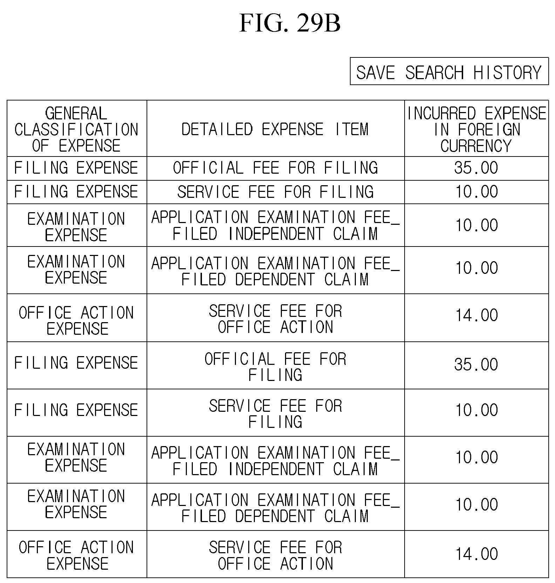

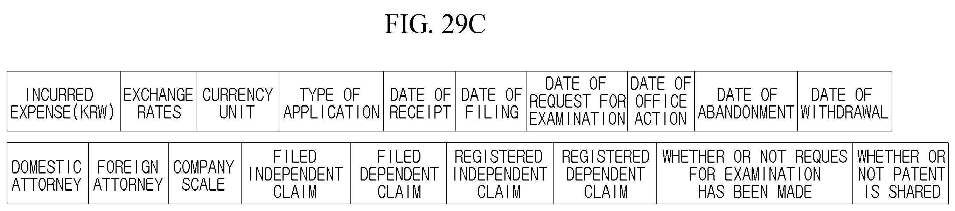

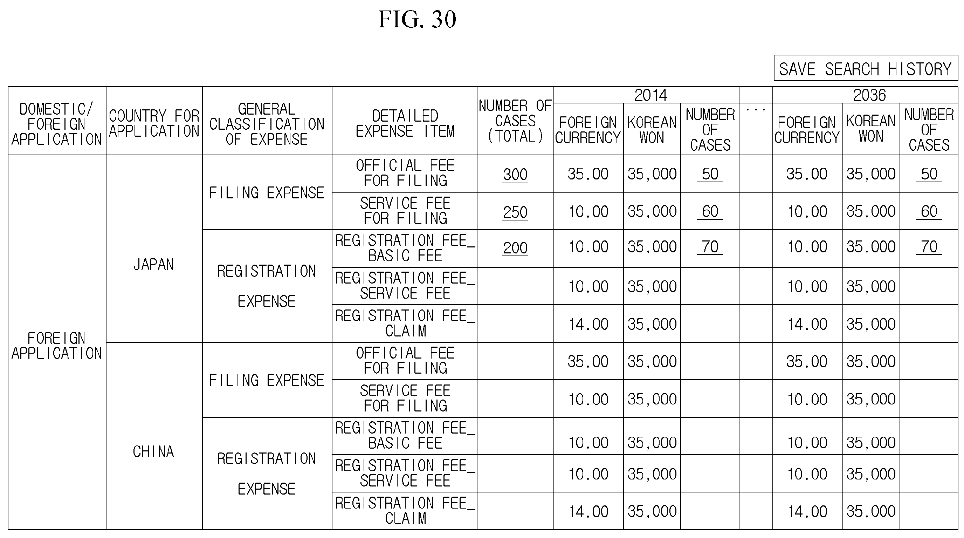

As an output method, case-specific, annual, quarterly, monthly, or daily output is selected. FIG. 29 is a diagram showing a state of checking case-specific expense estimation results according to an exemplary embodiment of the present invention, and FIG. 30 is a diagram showing a state of checking annual expense estimation results according to an exemplary embodiment of the present invention.

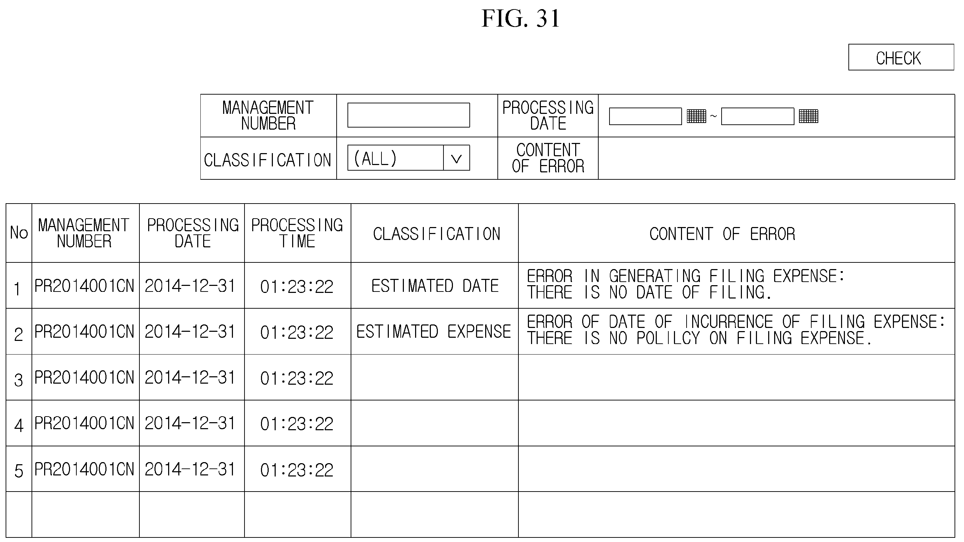

As shown in FIGS. 29 and 31, it is possible to output and provide case-specific expense estimation results, and when a management number is clicked, a master ledger pops up and is displayed.

At this time, the dates of incurrence of expenses are automatically generated by expense incurrence logic, and payment dates for expenses are calculated from the dates of incurrence of expenses in consideration of period-specific representative values.

The management number of a filed case which is expected to be made in the future is automatically set and shown with reference to the number of received cases included in policy variables. At this time, the management number is set to be distinguishable by changing "PR" which is a prefix of a management number to "XX" or in another way.

When annual expense estimation is given as an output condition, annual expense sum information is provided according to detailed items of each expense corresponding to a general expense classification of a country for application.

Upon an inquiry into expense estimation results, a list of charged expenses including those which have not been paid is displayed.

According to an exemplary embodiment of the present invention, expense estimation results are output together with expense estimation processing information and error occurrence information.

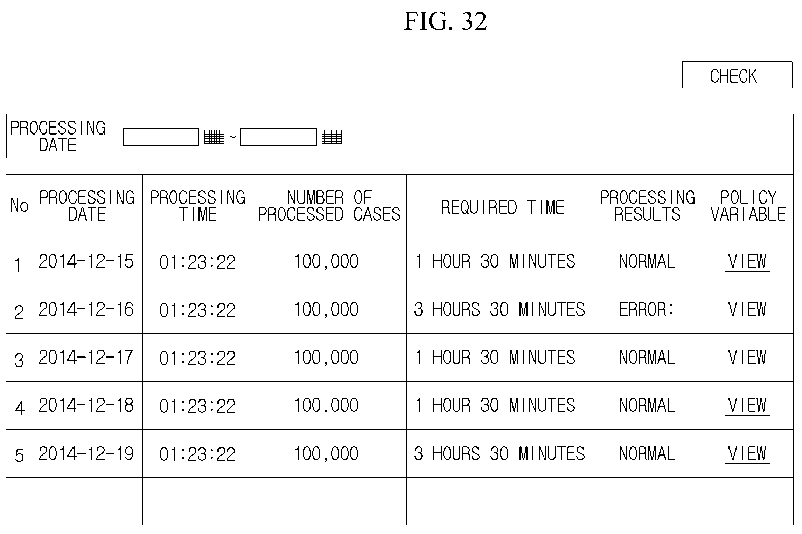

FIG. 31 is a diagram showing a state of checking an expense estimation error according to an exemplary embodiment of the present invention, and FIG. 32 is a diagram showing expense estimation error processing results according to an exemplary embodiment of the present invention.

As shown in FIG. 32, detailed information of processing dates, processing times, and error content is output to the screen.

After patent expense estimation, a time taken for the corresponding process, the number of processed cases, and process results ("Normal" and "Error") are output to the screen, thus reliability of an entire examination is ensured.

According to an exemplary embodiment of the present invention, it is possible to manifestly check country-specific expected application information, policy variables, exchange rate information, filing expenses, and maintenance expenses.

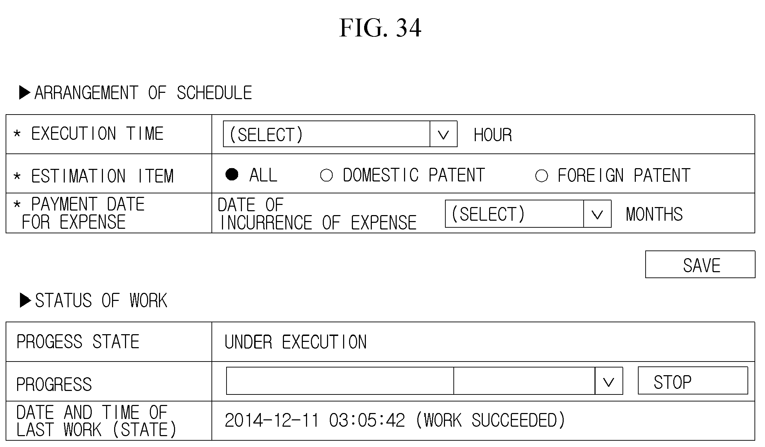

As shown in FIG. 34, the expense estimation administrator accesses a server to input a time at which an entire examination is performed, an item to be estimated, and selection information of payment dates for expenses, and to check progress status information, progress, the date and time of a last work, and state information.

Exemplary embodiments of the present invention have the following effects.

First, it is possible to manifestly check period-specific incurred expenses according to a patent expense management policy by calculating patent work process-specific expense items regarding expected application information according to the policy.

Second, country-specific patent expenses are estimated using country-specific expense item information according to each policy, so that accurate patent expenses can be estimated through an entire examination according to classified categories.

Third, policy-specific patent expense estimation results can be stored, and when a policy is changed, a simulation of incurrence estimation of patent expenses can be performed according to the changed policy. Therefore, it is possible to ensure the logicality and the reliability of a basis of the policy change.

Fourth, since an item of patent expense estimation results in which an error has occurred can be checked, it is easy to trace and correct a case in which the error has occurred.

Fifth, expenses that have been charged but have not been paid can be analyzed according to offices, periods, attorneys, countries, expense items.

Sixth, expenses can be analyzed according to attorneys, and thus it is possible to analyze determined liabilities, future expenses, periods, expense items, etc. according to attorneys.

Seventh, based on a critical date (date of receipt, date of filing, date of request for examination, date of withdrawal, date of abandonment, date of registration, etc.), analysis can be carried out according to countries, expense items, periods, and so on.

Eighth, calculation is facilitated by recording all critical dates, incurred expenses, and related data fields in a table.

According to exemplary embodiments of the present invention, since all incurred expenses are sequentially calculated based on a critical date and recorded in a table, the search speed can be very high.

The processing time varies according to the processing speed of a database, but search results can be checked within several seconds in the form of various combinations of periods, expense items, countries, attorneys, etc. even if there are tens of thousands of cases in the table.

This is enabled because all dates of incurrence of expenses and the incurred expenses are sequentially recorded in an expense estimation table together with related fields.

The effects of the present invention are not limited to those mentioned above, and other effects that are not mentioned can be clearly understood from the above detailed description by those of ordinary skill in the art.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A server for estimating patent prosecution related activity during a selected inquiry period, the server comprising:
a data input unit configured to receive at least one type of values among policy variable values, period-specific representative values, and expense parameter values;
a table construction unit configured to receive a setting value from the data input unit, generate case information for the patent prosecution related activity of at least one type of cases among previously received cases and cases to be received in future, generate a matched expense item by calculating dates of patent prosecution related activity and incurrence of expenses regarding the case information, and record the dates of patent prosecution related activity and incurrence of expenses regarding the case information and incurred expenses in a table; and
an output unit configured to provide an estimation of patent prosecution related activity and expenses by outputting the table.

2. The server of claim 1, wherein patent prosecution related activity includes all events related to patent prosecution of a patent application comprising: initial filing of the application; filing Information Disclosure Statements; Request for Examination; receiving Office Actions; filing responses to Office Actions; filing continuations; filing appeals; receiving Notice of Allowances, payment of Issue Fees; and payment of Maintenance Fees.

3. The server of claim 1 or 2, wherein the data input unit receives country-specific received case information, which includes numbers of received cases and receipt periods corresponding to country-specific categories, as the policy variable values.

4. The server of claim 1, 2, or 3, wherein the data input unit receives a withdrawal rate, an abandonment rate, and a number of issuance of office actions regarding the at least one type of cases as the policy variable values.

5. The server of one of claims 1 to 4, wherein the data input unit receives period-specific representative values regarding a series of processes including events of patent prosecution related activity.

6. The server of one of claims 1 to 5, wherein the data input unit receives, as the expense parameter values, item-specific expense information regarding a series of processes including events of patent prosecution related activity.

7. The server of one of claims 1 to 6, wherein the table construction unit records other fields in addition to the dates of patent prosecution related activity and incurrence of expenses and the incurred expenses in the table.

8. The server of one of claims 1 to 7, wherein the dates of incurrence of expenses are generated by applying periods corresponding to the period-specific representative values to a critical date of the case information, and
the incurred expenses are matched with items of the dates of incurrence of expenses among the expense parameter values.

9. The server of one of claims 1 to 8, wherein the data input unit inquires about statistical period values according to an inquiry period and applies the statistical period values to inputs of the period-specific representative values.

10. The server of one of claims 1 to 9, wherein the data input unit inquires about statistical expense values according to an inquiry period and applying the statistical expense values to inputs of the expense parameter values.

11. The server of one of claims 1 to 10, wherein the table construction unit calculates the dates of patent prosecution related activity and incurrence of expenses using the policy variable values, the period-specific representative values, and the expense parameter values according to the setting value received from the data input unit, and constructs the table including expense items calculated for the calculated dates of incurrence of expenses as field values.

12. The server of one of claims 1 to 11, wherein the output unit performs a search according to an output condition generated as a combination of fields recorded in the table, and outputs expenses.

13. A method of estimating a patent expense, the method comprising:
(a) receiving, by a data input unit, at least one type of values among policy variable values, period-specific representative values, and expense parameter values;
(b) receiving a setting value from the data input unit, generating case information of at least one type of cases among previously received cases and cases to be received in future, and calculating dates of incurrence of expenses regarding the case information to generate a matched expense item;
(c) recording field values including the dates of incurrence of expenses regarding the case information and incurred expenses in a table; and
(d) outputting the table in which the field values are recorded according to an output condition.

14. A server for estimating a patent expense, the server comprising:
a data input unit configured to receive at least one type of values among policy variable values, period-specific representative values, and expense parameter values;
a table construction unit configured to receive a setting value from the data input unit, generate case information of at least one type of cases among previously received cases and cases to be received in future, generate a matched expense item by calculating dates of incurrence of expenses regarding the case information, and record the dates of incurrence of expenses regarding the case information and incurred expenses in a table; and
an output unit configured to provide patent expense estimation results by outputting the table.

15. A system for estimating a patent expense, the system comprising:
a terminal configured to receive and transmit at least one type of values among policy variable values, period-specific representative values, and expense parameter values when authentication as an administrator account is finished; and
a server configured to receive the at least one type of values among policy variable values, period-specific representative values, and expense parameter values, transmitted when the authentication with the terminal is finished, and calculate dates of patent expense estimation results according to information on expense estimation settings received from a terminal whose authentication is finished as the administrator account or a user account.
